# EUROPEAN PATENT APPLICATION

(11) **EP 3 796 202 A1**
(43) Date of publication of application: **24.03.2021**
(21) Application number: 19198098.6
(22) Date of filing: 18.09.2019
(51) Int. Cl.: G06F 30/13, G06F 30/17, G06F 111/20, G06F 119/20

(54) **AUTOMATED DETAIL ADAPTATION AND INSERTION IN A CAD MODEL**

(71) Applicant: Bricsys NV, 9050 Gent (Ledeberg) (BE)
(72) Inventor: DE ZAEYTIJD, Jürgen, 9820 Merelbeke (BE); DEGHELDERE, Sam, 9000 Gent (BE)

(57) **Abstract**

Based on user input, a detail and N base solids at or near the detail are obtained. A solid type for each base solid is obtained. A reference parametrization for the base solids based on the solid types of the base solids is obtained. The reference parametrization comprises one or more parameters and associated initial parameter values for the base solids. N target solids are retrieved which comprise properties compatible with the N base solids based on the reference parametrization. A spatial transformation and new parameter values for the reference parametrization which form a mapping between the base solids and the target solids are computed. An adapted detail is inserted at or near the target solids, or the insertion thereof is suggested via a visualization means. The adapted detail is based on the detail, the spatial transformation and the new parameter values.

## Description

### Technical field

The invention pertains to detail adaptation and detail insertion, or the suggestion thereof via a visualization means, in a computer-aided design (CAD) model, in particular to a surrounding similar to the current surrounding of the detail.

### Background

US 7 079 990 B2 discloses a method for use within a 3D CAD model. A corresponding part (e.g. a fastener) is automatically identified for a feature (e.g. a hole) based on attributes of the feature. The geometry of the identified part may be adjusted based on attributes of the feature (e.g. fastener length to match hole depth). The identified part is then automatically positioned in a coupling relationship with the feature.

US 7 079 990 B2 does not provide for feature (or part) insertion *to a surrounding similar to the current surrounding* of the feature (or part). US 7 079 990 B2 is concerned with selecting for a feature a part from an external part library, solely based on attributes *of the feature.*

The present invention aims to provide for detail insertion in a CAD model *to a surrounding similar to the current surrounding* of the detail.

US 2017/0 169 135 A1 discloses a replication method for use within CAD software. The method, according to the abstract, ignores parametric requirements and instead searches 3D geometry of components mated to a replication candidate that are *identical* to those on which the replication candidate is constrained.

US 2017/0 169 135 A1 does not provide for *detecting and*/*or adapting a non-identical but related component* for mating a replication candidate. The document does not provide for *adapting the replication candidate* to a component. The document does not provide for *efficiently detecting* related components in a CAD model in case multiple components are mated with a single replication candidate.

The present invention aims to resolve at least some of the problems and disadvantages mentioned above.

### Summary of the invention

In a first aspect, the present invention provides a **computer-implemented method** (CIM) for detail adaptation and insertion in a computer-aided design (CAD) model, according to claim 1.

In a second aspect, the present invention provides a **computer** system for detail adaptation and insertion in a CAD model, whereby the computer system is configured for performing the CIM according to the first aspect of the present invention.

In a third aspect, the present invention provides a **computer program product** (CPP) for detail adaptation and insertion in a CAD model, whereby the CPP comprises instructions which, when the CPP is executed by a computer, cause the computer to carry out the CIM according to the first aspect of the present invention.

In a fourth aspect, the present invention provides a **data structure** for detail adaptation and insertion in a CAD model, according to claim 15.

A "detail", as used herein, comprises zero, one or more **detail objects.** A detail object may be a detail solid, a detail block reference, or the like. An example pertains to multiple beams (base solids) connected via a joint and bolts (detail objects). A detail comprising zero detail objects may be a **detail boundary** between multiple base solids. An example pertains to a layer connection pattern (detail boundary) between two multi-layered walls (base solids).

The present invention provides for detail replication onto target solids (target context) similar to the base solids (reference context). Via the **parametrization,** the present invention allows for deviations (within variations of the parameter values) of the target context (target solids) with respect to the reference context (base solids). The target solids may hence differ from, and/or may comprise a differing configuration from, the base solids.

The new parameter values represent a geometric adaptation of the base solids (reference context) to the target solids (target context). A new parameter value may be, for example, a new layer thickness parameter value, a new profile cross section parameter value or a new relative angular parameter value between two base solids, to geometrically adapt ("morph") the base solids from the reference context to the target solids of the target context.

The spatial transformation may comprise rotations, translations and reflections. The computed new parameter values may also be referred to as a "morphing transformation" or "geometry transformation". Preferably, new parameter values are computed before computing a spatial transformation to map a geometrically adapted detail onto the target context.

In a preferred embodiment, the present invention provides for detail replication via adaptation of a **detail volume** encompassing the detail, and inserting (or suggesting via the visualization means the insertion) of the adapted detail volume to **replace** the corresponding volume at or near the target solids.

The detail volume may comprise one or more detail objects (e.g. a joint and bolts for connecting two beams) and/or local modifications of one or more of the base solids (e.g. a through-hole in a beam for a bolt; e.g. a layer connection pattern between two multi-layered walls). When modification of a target solid is required for detail insertion (e.g. creation of a through-hole for a bolt), the detail volume is advantageous as it "copies-and-pastes" a feature of a base solid inside the detail volume (e.g. a through-hole) onto a corresponding target solid, via **replacement** of a corresponding volume at or near the target solids with the adapted detail volume.

### Description of figures

**Figures 1****,** **2****,** **3** **and** **4** show perspective views of exemplary planar base solids, which are interconnected along an extrusion direction (detail).
**Figures 5A****,** **5** **B and 5C** show cross section views of exemplary planar base solids, with indication of a planar two-dimensional detail volume.
**Figures 6A, 6B****,** **6C** **and** **6D** show cross section views of exemplary planar base solids, with indication of parameters.
**Figures 7A** **and** **7B** show schematic cross section views of exemplary planar base solids, with indication of constraints.
**Figures 8A****,** **8B and 8C** show cross section views of exemplary planar base solids, to illustrate retrieval of target solids and mapping.
**Figures 9A, 10A****,** **11A and 12A** show cross section views of exemplary planar base solids connected in a detail. **Figures 9B, 10B****,** **11B and 12B** show cross section views of corresponding details adapted and inserted to a similar target context.
**Figures 13 and 14** show perspective views of exemplary linear base solids, which are connected according to a detail comprising detail objects.
**Figure 15** shows a coordinate system to illustrate exemplary parameters for linear base solids. **Figures 16A, 16** **B and 17** show perspective views of exemplary linear base solids, to illustrate the exemplary parameters of **Figure 15****.**
**Figure 18** shows a cross section view of an exemplary profile (linear base solid), and a corresponding parametrization.
**Figures 19A and 20A** show perspective views of exemplary linear base solids connected in a detail. **Figures 19B and 20B** show perspective views of corresponding details adapted and inserted to a similar target context.

### Detailed description of the invention

The present invention concerns a CIM, a computer system, and a CPP for detail adaptation and insertion in a CAD model. The invention has been summarized in the corresponding section above, and several advantages have been discussed. In what follows, the invention will be described in detail, preferred embodiments are discussed, and the invention will be illustrated by means of non-limitative examples.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

### Term definitions

"A", "an", and "the" as used herein refers to both singular and plural referents unless the context clearly dictates otherwise. By way of example, "a compartment" refers to one or more than one compartment.

"Comprise", "comprising", "comprises" and "comprised of" as used herein are synonymous with "include", "including", "includes" or "contain", "containing", "contains" and are inclusive or open-ended terms that specify the presence of what follows, e.g. a component, and do not exclude or preclude the presence of additional, non-recited components, features, elements, members, steps, known in the art or disclosed therein.

"Based on" as used herein is synonymous with "based at least in part on" and is an inclusive or open-ended term that specifies the presence of what follows (e.g. a component) and does not exclude or preclude the presence of additional, non-recited components, features, elements, members, steps, or the like.

A "computer-aided design model" (CAD model), as used herein, comprises computer-processable data, preferably digital data, about one or more solids, said data representing, or allowing to derive, properties of the solids, such as geometric properties, material properties and/or semantic properties. Said data may also represent, or may allow to derive, relative geometric properties between solids. A CAD model, as used herein, is preferably a building information model (BIM). One of ordinary skill in the art will appreciate that while the present invention preferentially involves a BIM, it may also be used for CAD models in different fields, such as, for example, mechanical engineering. An exemplary file format for storing a CAD model is DWG. One of ordinary skill in the art will appreciate that a CAD model comprises a computer-processable image in vector format, e.g. in DWG file format, defined in terms of low-level features, such as, for example, vertices, edges, and faces.

A CAD model may be viewed and edited via a corresponding CPP, so-called CAD software. CAD software most preferably provides a graphical user interface (GUI) for viewing and editing the CAD model. A non-limiting list of CAD software comprises 123D, ACIS, Advance Concrete, Advance Design, Advance Steel, AllyCAD, ArchiCAD, AutoCAD, BricsCAD, BRL-CAD, C3D, Caddie, Cadwork, CATIA, Chief Architect, Cobalt, Creo, DataCAD, DesignSpark Mechanical, Digital Project, Drawing Express, FINE MEP, form•Z, FreeCAD, HiCAD, IDEA Architectural, Inventor, IRONCAD, ItelliCAD, KeyCreator, LibreCAD, MEDUSA, MicroStation, Modelur, NanoCAD, NX, OpenCASCADE, OpenSCAD, Parasolid, PTC Creo, PowerCADD, progeCAD, PunchCAD, QCad, Revit Architecture, Revit MEP, Revit Structure, Rhinoceros 3D, RoutCad, SALOME, ShapeManager, SketchUp, Solid Edge, SolidWorks, SolveSpace, SpaceClaim, SpaceClaim Engineer, Tekla Structures, TopSolid, TransMagic, TurboCAD, VariCAD, VectorWorks, and VisualARQ. A non-limiting list of BIM software comprises Allplan, ArchiCAD, ARCHLine.XP, Autodesk Revit, BricsCAD, CodeBook, DDS-CAD, Digital Project, FINE MEP, GRAITEC Advance, IDEA Architectural, MicroStation, Navisworks, OpenStudio, RFEM, Tekla BIMsight, Tekla Structures, Trimble SketchUp, VectorWorks Architect, Vico Office, and VisualARQ.

A non-limiting list of "geometric properties" of a solid comprises a position; an orientation; a dimension, such as a length, a width, a height, a thickness, a diameter, and the like; an inclination, such as with the vertical axis; a direction of a principal axis; and a radius of curvature.

A non-limiting list of "relative geometrical properties" of two solids comprises a relative distance; a relative orientation; a relative position, such as a relative height; a relative angle, such as a relative angle between faces or axes; and a relative size, such as a relative dimension, relative area, or relative volume.

A non-limiting list of "material properties" of a solid comprises a material specification or composition; a tensile strength per area; a melting temperature; a price per volume or weight; and a density.

A non-limiting example of a "semantic property" of a solid is a function classification, in particular a BIM type classification, such as wall, roof, beam, column, window, and the like.

A "detail", as used herein, comprises zero, one or more detail objects. A detail object may be a detail solid, a detail block reference, or the like. An example pertains to multiple beams (base solids) connected via a joint and bolts (detail objects). A detail comprising zero detail objects may be a detail boundary between multiple base solids. An example pertains to a layer connection pattern (detail boundary) between two multi-layered walls (base solids).

A "spatial index" is a data structure that allows for accessing a spatial element efficiently. A particularly preferred spatial index for CAD models is a hierarchical spatial index. A "hierarchical spatial index" comprises intermediary nodes and leaf nodes. A leaf node comprises a pointer to a spatial element and geometric containment information about the spatial element. An intermediary node comprises pointers to one or more nodes (leaf and/or intermediary nodes) and geometric containment information for all spatial elements to which it points. A most preferred hierarchical spatial index for CAD models is an "R-tree", wherein the geometric containment information is a bounding box (e.g. a rectangle or a cuboid).

### Invention aspects

In a first aspect, the present invention provides a CIM for detail adaptation and insertion in a CAD model. In a second aspect, the present invention provides a computer system for detail adaptation and insertion in a CAD model, whereby the computer system is configured for performing the CIM according to the first aspect. In a third aspect, the present invention provides a CPP for detail adaptation and insertion in a CAD model, whereby the CPP comprises instructions which, when the CPP is executed by a computer, such as a computer system according to the second aspect, cause the computer to carry out the CIM according to the first aspect. The present invention may further also provide a tangible non-transitory computer-readable data carrier comprising the CPP. In a fourth aspect, the present invention provides a data structure for detail adaptation and insertion in a CAD model. The fourth aspect may be used to store data regarding a detail on a tangible non-transitory computer-readable storage medium. The data may then be loaded from the storage medium, and the detail may be adapted and inserted, according to the CIM of the first aspect. The four aspects of the present invention are hence interrelated. Therefore, all features disclosed in this document, above or below, may relate to each of these aspects, even if they have been disclosed in conjunction with a particular aspect.

The **CI M** comprises the steps of:
- obtaining, based on user input, from a reference CAD model a detail and N base solids at or near the detail, wherein N is at least one (N ≥ 1);
- automatically obtaining a solid type for each base solid;
- automatically obtaining a reference parametrization for the base solids based on the solid types of the base solids, wherein the reference parametrization comprises one or more parameters and associated initial parameter values for the base solids;
- automatically retrieving in a target CAD model N target solids comprising properties compatible with the N base solids based on the reference parametrization;
- automatically computing a spatial transformation and new parameter values for the reference parametrization which form a mapping between the base solids and the target solids;
- automatically inserting, or suggesting via a visualization means the insertion of, an adapted detail at or near the target solids, wherein the adapted detail is based on the detail, the spatial transformation and the new parameter values.

The target CAD model may be the reference CAD model or another CAD model.

The present invention provides for detail replication onto target solids (target context) similar to the base solids (reference context). Via the parametrization, the present invention allows for deviations (within variations of the parameter values) of the target context (target solids) with respect to the reference context (base solids). The target solids may hence differ from, and/or may comprise a differing configuration from, the base solids.

The new parameter values represent a geometric adaptation of the base solids (reference context) to the target solids (target context). A new parameter value may be, for example, a new layer thickness parameter value, a new profile cross section parameter value or a new relative angular parameter value between two base solids, to geometrically adapt ("morph") the base solids from the reference context to the target solids of the target context.

The spatial transformation may comprise rotations, translations and reflections. The computed new parameter values may also be referred to as a "morphing transformation" or "geometry transformation". Preferably, new parameter values are computed before computing a spatial transformation to map a geometrically adapted detail onto the target context.

In a preferred embodiment, the insertion of an adapted detail at or near the target solids is suggested via a visualization means. In this embodiment, a user can accept or decline a suggested insertion of an adapted detail via user input, preferably via a GUI, most preferably via an accept and/or decline widget displayed at or near the suggested insertion of an adapted detail via user input via the GUI.

The **data structure** is configured for representing:
- a detail CAD model, comprising:
   ∘ a detail, comprising zero, one or more detail objects;
   ∘ N base solids at or near the detail, with N ≥ 1;
- a detail annotation, comprising:
   ∘ an identification of the N base solids;
   ∘ an identification of the zero, one or more detail objects;
   ∘ a solid type for each the base solids;
   ∘ a detail type;
   ∘ a detail volume encompassing the detail;
   ∘ a detail size;
   ∘ a parametrization;
   ∘ optionally, one or more constraints for the parametrization.

In a preferred embodiment, the detail annotation is embedded in the detail CAD model. More preferably, the data structure is a CAD model data structure which embeds one or more layers for representing the detail annotation.

### Obtaining, based on user input, a detail and N base solids

A detail and N base solids at or near the detail, wherein N is at least one, are obtained from a reference CAD model based on user input.

The detail and base solids may be obtained via user selection in a first CAD model via a GUI. In a first embodiment, the detail and base solids may be obtained via user selection of each of the base solids, and, if present, each of the detail objects. In a second embodiment, the detail and base solids may be obtained via user selection of the base solids, whereupon one, more or all of the detail objects are automatically identified. The automatically identified detail objects may be indicated via the GUI, and confirmation thereof may be requested via the GUI.

Automatic identification of (part of) a detail may be based on one or more geometric properties, one or more material properties, one or more semantic properties and/or one or more relative geometric properties of the base solids. An example is a relative distance, e.g. for a bolt in a through-hole of a beam. Another example is a relative dimension, e.g. of a joint with respect to a beam. Yet another example is the BIM classification of two beams being of the type "beam".

In what follows, a "detail configuration" comprises:
- a second CAD model, comprising:
   ∘ the detail, comprising zero, one or more detail objects;
   ∘ the N base solids at or near the detail, with N ≥ 1;
- a detail annotation, comprising:
   ∘ an identification of the N base solids (e.g. (7, 'B') indicating that solid no. 7 is a 'B'ase solid);
   ∘ an identification of the zero, one or more detail objects (e.g. (4, 'D') indicating that solid no. 4 is a 'D'etail object);
   ∘ optionally, a solid type for one or more of the base solids;
   ∘ optionally, a detail type;
   ∘ optionally, a detail volume encompassing the detail;
   ∘ optionally, a detail size;
   ∘ optionally, a reference parametrization;
   ∘ optionally, one or more constraints for the reference parametrization.

Below, it will be explained how a solid type of a base solid; a detail type; a detail volume encompassing the detail; a detail size; a parametrization; and a constraint for the parametrization may be derived based on the detail and base solids. An item of this list may be included in the detail annotation, but does not have to be. If present, the item can be retrieved from the detail annotation. If not present, the item can be derived based on the detail and base solids.

Preferably, the second CAD model comprises less solids than the first CAD model. Preferably, the second CAD model is the first CAD model, wherein geometric entities from the first CAD model other than the base solids and detail objects are removed.

A detail file comprising a detail configuration may be stored on a tangible non-transitory computer-readable storage medium. Preferably, a library of detail files is created by a user, for subsequent selection by the user, for detail adaptation and insertion in target CAD models.

In a preferred embodiment, the step of obtaining the detail and base solids from a reference CAD model is the step of obtaining a detail configuration via user input. Preferably, the step of obtaining the detail and base solids is the step of obtaining via user input a detail file comprising a detail configuration. In this embodiment, the second CAD model is the reference CAD model. Preferably, the detail file is structured according to said data structure. In this embodiment, the reference CAD model, the detail CAD model, and the second CAD model are synonymous.

Alternatively, the step of obtaining the detail and base solids from a reference CAD model is the step of obtaining, via user selection in a GUI, from the reference CAD model said detail and base solids. Herein, the first CAD model is the reference CAD model. Subsequently, a detail file may be stored as described above.

### Solid types

A solid type for each base solid is automatically obtained.

In a preferred embodiment, a solid type is one of linear, planar and compact.

In a preferred embodiment, the step of automatically obtaining a solid type for each base solid is the step of: automatically selecting a solid type for each base solid based on one or more geometric properties of the base solid.

In case the base solids and the detail are obtained from a detail configuration, the step of automatically obtaining a solid type for each base solid is preferably the step of: if present, obtaining the solid type for a base solid from the detail annotation, or if not present, selecting a solid type for the base solid based on one or more geometric properties of the base solid.

A solid type for a base solid may be selected based on one or more geometric properties of the base solid. An exemplary selection is:
- In case a solid extends along a first spatial direction substantially more than in directions perpendicular to the first spatial direction, the solid type **linear** may be selected for the solid. A non-limiting list of examples of linear solids comprises a beam; a column; a member; a post; a profile; a shaft; and a strut. The first spatial direction is preferably an extrusion or elongation direction.
- In case a solid comprises two parallel planar outer faces, extending along all directions parallel to the planar faces substantially more than in the direction perpendicular to the planar faces, wherein the two outer faces form the majority of the surface of the solid, the solid type **planar** may be selected for the solid. A non-limiting list of examples of planar solids comprises a slab; and a wall.
- In case a solid is not linear or planar, the solid type **compact** may be selected for the solid.

The reference, second or detail CAD model may also comprise for a base solid a semantic property, such as a BIM type classification. Obtaining a solid type for each base solid may be based at least in part on BIM type classification of a base solid.

### Parametrization

A reference parametrization for the base solids based on the solid types of the base solids is automatically obtained. The reference parametrization comprises one or more parameters and associated initial parameter values for the base solids.

In a preferred embodiment, a parameter is a geometric parameter for a geometric property of a solid or a relative geometric parameter for a relative geometric property between two solids.

In a preferred embodiment, the step of automatically obtaining a reference parametrization for the base solids based on the solid types of the base solids is the step of: selecting a parametrization from a group of parametrizations based on the solid types of the base solids. The parametrization selection may further be based on BIM type classification and/or geometric properties and/or relative geometric properties of (one, more or all) of the base solids.

The group of parametrizations may be based on heuristic rules and/or previous user input relating to manual editing of a parametrization and/or artificial intelligence. Preferably, the group of parametrizations is based on heuristic rules. Preferably, a selected parametrization from an initial group of parametrizations based on heuristic rules may be manually edited via user input, whereby the edited parametrization and the solid types (and optionally BIM type classification and/or geometric properties and/or relative geometric properties) of the base solids are provided as input to train a machine learning algorithm to predict a parametrization.

In case the base solids and the detail are obtained from a detail configuration, the step of automatically obtaining a reference parametrization for the base solids based on the solid types of the base solids is preferably the step of: if present, obtaining the reference parametrization from the detail annotation, or if not present, determining the parametrization based on the solid types, and preferably geometric properties, of the base solids, in particular selecting a reference parametrization from a group of parametrizations based on the solid types (and optionally BIM type classification and/or geometric properties and/or relative geometric properties) of the base solids.

In a first example, wherein N ≥ 2, the base solids comprise multiple layers, e.g. two multi-layer walls. The reference parametrization comprises a thickness parameter for each layer of each base solid. Most preferably, the base solids are of the planar solid type. Preferably, the reference parametrization comprises an angle parameter between two base solids, e.g. an angle between two major faces each comprised in one of the multi-layer walls.

In a second example, wherein N ≥ 2, the base solids comprise a central axis. The reference parametrization comprises an angle parameter between the central axes of two base solids. Most preferably, the base solids are of the linear solid type. Preferably, a base solid is a profile, and the parametrization comprises geometric properties of the cross-section of the profile.

### Detail volume

In a preferred embodiment, the CIM comprises the step of automatically obtaining a detail volume encompassing the detail. In this embodiment, said adapted detail is an adapted detail volume. In this embodiment, said step of inserting or suggesting is the step of:
- automatically inserting, or suggesting via a visualization means the insertion of, an adapted detail volume to replace a corresponding volume at or near the target solids, wherein the adapted detail volume is based on the detail volume, the spatial transformation and the new parameter values.

In a preferred embodiment, the detail volume comprises a surface, wherein each base solid intersects the surface of the detail volume.

The detail volume may comprise one or more detail objects (e.g. a joint and bolts for connecting two beams) and/or local modifications of one or more of the base solids (e.g. a through-hole in a beam for a bolt; e.g. a layer connection pattern between two multi-layered walls). When modification of a target solid is required for detail insertion (e.g. creation of a through-hole for a bolt), the detail volume is advantageous as it "copies-and-pastes" a feature of a base solid inside the detail volume (e.g. a through-hole) onto a corresponding target solid via replacement of a corresponding volume at or near the target solids with the adapted detail volume.

In a preferred embodiment, the step of automatically obtaining the detail volume encompassing the detail is the step of computing a detail volume encompassing the detail based on the base solids and the detail.

In case the base solids and the detail are obtained from a detail configuration, the step of automatically obtaining a detail volume encompassing the detail is preferably the step of: if present, obtaining the detail volume from the detail annotation, or if not present, computing the detail volume encompassing the detail based on the base solids and the detail.

A detail volume may be of a predefined detail type. Two exemplary detail types are planar two-dimensional (2D) and three-dimensional (3D). A detail volume of detail type planar 2D is also called a planar 2D detail volume. A detail volume with detail type 3D is also called a 3D detail volume.

All dimensions of a 3D detail volume are relevant for detail propagation. For example, when multiple beams (base solids) are connected via bolts to a joint, the joint and bolts (detail) can be encompassed in a 3D detail volume. Whenever similar beams join under similar angles, they may be connected with a similar joint, and the 3D detail volume can be adapted and inserted.

A second detail type is planar 2D, whereby the planar 2D detail volume comprises an extrusion direction perpendicular to the planar 2D detail volume along which the parts of the base solids enclosed within the detail volume remain invariant in the extrusion direction over a corresponding extrusion dimension. For example, when a multi-layer wall and a multi-layer slab (base solids) join along an edge, whereby the layers comprise a particular boundary (detail), i.e. a particular connection structure between the multiple layers, it is desirable to adapt and insert the particular boundary also for walls and slabs comprising a different connection length. The relevant detail volume is in this case a planar 2D detail volume perpendicular to the connection edge (defining the extrusion direction), whereby the walls comprise a part enclosed in the planar 2D detail volume which remains invariant over the connection length (extrusion dimension).

In a preferred embodiment, the CIM comprises the step of automatically obtaining a detail type (planar 2D or 3D) based on the solid types of base solids.

For the **first example** disclosed above, wherein the N ≥ 2 base solids are of the planar solid type and comprise multiple layers, the detail volume is of the detail type planar 2D. The detail volume comprises an extrusion direction perpendicular to the planar 2D detail volume along which the parts of the base solids enclosed within the detail volume remain invariant in the extrusion direction over a corresponding extrusion dimension.

For the **second example** disclosed above, wherein the N ≥ 2 base solids are of the linear solid type and comprise a central axes, the detail volume is of the detail type 3D.

In case the base solids and the detail are obtained from a detail configuration, the step of automatically obtaining a detail type based on the solid types of the base solids is preferably the step of: if present, obtaining the detail type from the detail annotation, or if not present, selecting the detail type based on the solid types of the base solids.

In a **first** preferred embodiment, the step of computing a detail volume encompassing the detail comprises the steps of:
- determining for each base solid a base detail part;
- determining for each base solid a directed bounding box encompassing said base solid, the detail objects, and the base detail parts;
- determining an intersection of the directed bounding boxes; and
- obtaining said detail volume based on said intersection.

A directed bounding box for a set of objects is a box that encloses the set of objects and comprises an orientation and shape, preferably cuboid or rectangular shape, configured for tightly enclosing the set of objects.

In case of a 3D detail volume, the directed bounding boxes are three-dimensional. In this case, the bounding boxes may be cuboids. In case of a 2D detail volume, the directed bounding boxes are preferably two-dimensional and perpendicular to the extrusion direction. In this latter case, the directed bounding boxes may be rectangles. In this latter case, "encompassing" should be understood as encompassing the cross-section.

In a preferred embodiment, a base solid comprises a major axis along which the base solid extends into said intersection. The major axis may be a central axis, a principal axis or a symmetry axis. The major axis may be a longitudinal axis for linear solid types, such as beams, columns, and the like. Preferably, the CIM comprises the step of adjusting the intersection so that the adjusted intersection comprises a surface portion perpendicular to the major axis of the base solid, through which surface portion the base solid extends into the intersection.

In a **second** alternative embodiment, the detail volume may be automatically computed as a cuboid or rectangular bounding box encompassing the detail. The cuboid may be aligned with the axes of a global coordinate system (GCS) of the reference, second or detail CAD model. Alternatively, the cuboid may be aligned with axes of the detail, such as inertial axes of a detail object.

In a **third** alternative embodiment, the detail volume may be automatically computed as a sphere encompassing the detail. Preferably, the sphere is the smallest sphere encompassing the detail. The smallest sphere may be determined via Welzl's algorithm, as disclosed in, for example, Welzl (1991), "Smallest enclosing disks (balls and ellipsoids)", https://doi.org/10.1007/BFb0038202.

In a preferred embodiment, upon computing new parameter values for the reference parametrization, an adapted detail volume based on the new parameter values is computed.

### Retrieving N target solids

In a target CAD model, N target solids are automatically retrieved which comprise properties compatible with the N base solids based on the reference parametrization. A property may be a geometric property, a relative geometric property, a material property or a semantic property.

Preferably, all possible target sets of N target solids are retrieved in the target CAD model.

In a preferred embodiment, a detail size for the detail is automatically obtained. The detail size may be based on minimal distances between all pairs of base solids, in particular the maximum of the minimal distances. In a first preferred embodiment, the detail size is equal to or proportional to (such as 1.2 or 2 times) the maximum of the minimal distances between all pairs of base solids. In a second preferred embodiment, the detail size may be the length of a diagonal of a bounding cuboid or rectangular box for the detail. Hereby, the bounding cuboid or rectangular box for the detail may be or may encompass the detail volume.

In case the base solids and the detail are obtained from a detail configuration, the step of automatically obtaining a detail size for the detail is preferably the step of: if present, obtaining the detail size from the detail annotation, or if not present, computing the detail size, e.g. based on one of the two preferred embodiments described in the preceding paragraph.

In a preferred embodiment, the step of retrieving in a target CAD model N target solids comprising properties compatible with the N base solids based on the reference parametrization is the steps of:
- automatically retrieving N target solids in the target CAD model;
- automatically verifying that the N target solids comprise properties compatible with the N base solids based on the reference parametrization.

In a most preferred embodiment, the step of verifying that the N target solids comprise properties compatible with the N base solids based on the reference parametrization comprises the steps of:
- obtaining a solid type for each target solid (which may have been determined earlier, stored in cache, and now retrieved from cache);
- obtaining a target parametrization for the target solids based on the solid types of the target solids, wherein the target parametrization comprises one or more parameters and associated target parameter values for the target solids;
- verifying compatibility of the reference and target parametrizations.

In this embodiment, the spatial transformation and/or the new parameter values are computed based on the target parameter values.

In a most preferred embodiment, in which N is at least two, the step of automatically retrieving N target solids in the target CAD model comprises the steps of:
- obtaining a detail size for the detail;
- searching for N target solids in the target CAD model, whereby all pairs of solids of the N target solids comprise a distance equal to or smaller than said detail size.

In a **first** preferred embodiment, the step of searching for N target solids in the target CAD model, whereby all pairs of solids of the N target solids comprise a distance equal to or smaller than said detail size, comprises the steps of:
- constructing a proximity graph comprising nodes and edges, wherein a node represents a solid of the target CAD model, wherein an edge interconnects two nodes if the solids represented by the two nodes comprise a distance smaller than said detail size;
- identifying a clique of size N, preferably each clique of size N, in the proximity graph, a clique in a graph being a set of completely interconnected nodes.

All cliques of size 2 can easily be identified based on the edges of the proximity graph. In a preferred embodiment, a clique of size k ≥ 3 is recursively determined via retrieval of two identified cliques of size k-1, which share k-2 nodes, and the subsequent verification that the other two (non-shared) nodes of the two identified cliques are interconnected by an edge in the proximity graph.

In a preferred embodiment, a tree data structure comprising a spatial index of all solids of the target CAD model is obtained. Constructing the proximity graph in this case involves performing a spatial query on the tree data structure. Preferably, the target CAD model comprises an R-tree, whereby the tree data structure is the R-tree.

In a preferred embodiment, the step of automatically retrieving N target solids in the target CAD model comprises the step of automatically pre-filtering solids of the target CAD model based on solid type compatibility with at least one of the base solids. Preferably, said pre-filtering is performed before construction of the proximity graph.

The applicant has found that the recursive clique finding algorithm works well even for large target CAD models, due to the pre-filtering for the proximity graph nodes.

In a preferred embodiment, the CIM comprises the step of verifying that the N target solids associated with a retrieved clique of size N comprise properties compatible with the N base solids, preferably:
- compatibility of the number of solids comprising a solid type (e.g. excluding a mismatch of the type 2 planar + 1 linear with 1 planar + 2 linear); and/or
- if present, compatibility of BIM type classification (e.g. excluding a mismatch of the type 2 "wall" with 1 "wall" + 1 "slab"); and/or
- compatibility of geometric properties (e.g. the number of layers in a multi-layer planar solid),
preferably all of the preceding verifications, preferably in that order. Preferably, the former two are performed before obtaining the target parametrization and the latter is performed via verifying compatibility of the reference and target parametrizations.

In a **second** preferred embodiment, alternative to N-cliques (cliques of size N), a search box with linear size based on the detail size may be utilized. The solids of the CAD model which overlap with the search box are identified. It is subsequently verified whether the overlapping solids comprise N target solids comprising properties compatible with the N base solids. Preferably, the search box comprises a linear size larger than the detail size, such as a linear size of two times the detail size. Preferably, the search box is translated iteratively over a translation distance. Preferably, the translation distance is equal to at most the linear size minus the detail size, such as a translation distance equal to the detail size when the linear size is equal to two times the detail size. For each translation of the search box, it is verified whether N suitable target solids can be retrieved which overlap with the search box. Preferably, a tree data structure comprising a spatial index of all solids of the target CAD model is obtained. Preferably, solids overlapping with a search box are retrieved by performing a query on the tree data structure. Preferably, the target CAD model comprises an R-tree, whereby the tree data structure is the R-tree.

In a **third** preferred embodiment, alternative to N-cliques, all 'first' solids with properties compatible with a first base solid are retrieved. Subsequently, all 'second' solids with properties compatible with a second base solid and proximate to a 'first' solid are identified. Proximate may be based on a relative distance of a 'second' solid to a 'first' solid of at most the detail size, or an actual relative distance between the first and second base solids. In addition to proximity, further relative geometric properties may be verified as well, such as a relative angle for beams, for example. In case of three or more base solids, analogous steps may be performed for the other base solids. In this embodiment, the filtering based on proximity and based on individual and/or relative geometric properties is interwoven.

### Spatial transformation and new parameter values

A spatial transformation and new parameter values for the reference parameterization which form a mapping between the base solids and the target solids are automatically computed.

In a preferred embodiment, first a one-to-one correspondence between the base solids and the target solids based on compatibility of solid type, one or more geometric properties and/or one or more relative geometric properties of the base solids and the target solids is determined. The one-to-one correspondence associates with each base solid one of the target solids and vice versa.

In a preferred embodiment, the new parameter values for the reference parametrization are obtained based on the target parameter values. Most preferably, the new parameter values are the target parameter values. Preferably, the spatial transformation is computed after determination of the new parameter values.

In a **first** preferred embodiment, a point and direction for each (geometrically adapted) base solid are determined. The spatial transformation is then computed as an iterative sequence of partial transformations, wherein each partial transformation maps the point and direction of a base solid onto a corresponding point and direction of the corresponding target solid. Each partial transformation may comprise a translation, a rotation and/or a reflection.

Most preferably, the detail volume encompasses the point, i.e. the point resides within the detail volume or on the surface of the detail volume. Preferably, said point and direction is an arrow. Most preferably, the arrow comprises an arrow point, whereby the detail volume encompasses said arrow point. The transformation is computed as an iterative sequence of partial transformations, i.e. an aggregate of partial transformations. Each partial transformation maps the point and direction of a base solid onto a corresponding point and direction of the corresponding target solid, i.e. according to the one-to-one correspondence. One point and direction may be determined and mapped for a base solid. Alternatively, more than one point and direction may be determined and mapped for a base solid. A further partial transformation thereby most preferably preserves certain constraints met by previous partial transformations.

In an example, a detail volume encompassing a joint and bolts is 'fitted' onto three beams. In this case, the base solids are three reference beams and the target solids are three target beams. First, a one-to-one correspondence between the reference and target beams is determined. This is performed bases on properties (geometric, material and/or semantic) of individual base solids (beams). In case all beams would have different profiles, e.g. one beam having an H-profile, one beam having a U-profile, and one beam having an O-profile, this suffices to determine the one-to-one correspondence. In case several beams in the set of base solids are similar, relative geometric properties, such as angles between longitudinal axes of the beams, may additionally be used to establish the one-to-one correspondence. A point and direction is determined for each reference beam, which may be performed before, after or during establishing the one-to-one correspondence. For beams, this is preferably a point on a longitudinal axis, such as a longitudinal central, symmetry or inertial axis, and the longitudinal direction. A first partial transformation is then computed mapping the point and direction of a first reference beam onto the longitudinal axis of the corresponding first target beam. The constraint to be met is that the point and direction remain aligned with the longitudinal axis. In case of an H-profile, four degrees of freedom remain: translation along the longitudinal axis, reflection about a first symmetry plane (comprising the longitudinal axis) of the H-profile, reflection about a second symmetry plane (comprising the longitudinal axis) of the H-profile, and reflection about a third symmetry plane (perpendicular to the longitudinal axis). In case of a circular O-profile, more degrees of freedom remain: in addition to the above-mentioned ones, also a rotation about the longitudinal axis. The remaining degrees of freedom are then utilized to establish the other partial transformation(s). Upon failure of mapping all points and directions, the target solids are discarded, and upon success, the validity is verified via the ability to compute new parameter values.

For linear base solids, such as a beam, for example, the point and direction are preferably associated with a longitudinal axis of the linear solid, preferably a longitudinal central, inertial and/or symmetry axis of the linear solid, preferably a point on the longitudinal axis and direction parallel to the longitudinal axis.

For planar base solids, such as a wall comprising a major planar face, for example, the point and direction are preferably associated with a normal direction of the major planar face, preferably a point on an edge, a vertex or a center, such as a geometric center, of the major planar face.

For compact base solids, preferably multiple points and directions are utilized, preferably whereby each point and direction are associated with a tangent or a normal to an edge or surface.

In a **second** alternative preferred embodiment, a reference center point for the base solids and a target center point for the target solids are determined. Preferably, the reference center point is associated with the reference parametrization. Preferably, the target center point is associated with the target parametrization. The spatial transformation may then be computed, wherein the spatial transformation comprises a mapping between the reference and target center points, and a rotation and/or relection. The rotation and/or reflection may be computed as an iterative sequence of rotations and/or reflections, each rotation and/or reflection of the sequence mapping a base solid onto a corresponding target solid.

### Verification

In a preferred embodiment, an additional verification of geometric coincidence of a mapping of reference intersection curves, of the (geometrically adapted) base solids with a surface of a (geometrically adapted) detail volume, onto the target solids may be performed.

The CIM may, in particular, comprise a stepwise verification of target solids, preferably comprising the steps of:
a) determining one or more one-to-one correspondences between the base solids and the target solids (if no compatible one-to-one correspondence can be found, discard the target solids; if at least one compatible one-to-one correspondence can be found, proceed);
b) determining a target parametrization based on a compatible one-to-one correspondence;
c) determining new parameter values based on the target parametrization (if this is not possible, go to b) and attempt another compatible one-to-one correspondence, or, in case no further compatible one-to-one correspondences remain, discard the target solids; proceed otherwise), the new parameter values defining geometrically adapted base solids and a geometrically adapted detail volume;
d) determining a point and a direction for each geometrically adapted base solid, and a reference intersection curve of each geometrically adapted base solid with a surface of the geometrically adapted detail volume;
e) computing a spatial transformation mapping the point and direction of each geometrically adapted base solid onto a corresponding point and direction of the corresponding target solid (if this is not possible, go to b) and attempt another compatible one-to-one correspondence, or, in case no further one-to-one correspondences remain, discard the target solids; proceed otherwise);
f) validating the spatial transformation via the reference intersection curves (verifying geometric coincidence of the mapped reference intersection curves onto the target solids) (if this is not possible, go to b) and attempt another compatible one-to-one correspondence, or, in case no further one-to-one correspondences remain, discard the target solids; otherwise said insertion or suggestion is performed).

Spatial interference of the detail and/or detail volume with solids other than the N target solids may be verified. Upon such interference, the N target solids are deemed not suitable and may be discarded.

The invention is further described by the following non-limiting examples which further illustrate the invention, and are not intended to, nor should they be interpreted to, limit the scope of the invention.

### Exam pies

### Example 1: Embodiment of an algorithm

The present example pertains to a preferred embodiment of an algorithm (CIM) according to the present invention. The algorithm of this embodiment comprises the steps of:
- obtaining, based on user input, from a reference CAD model a detail and N base solids at or near the detail, wherein N ≥ 1;
- automatically obtaining a solid type for each base solid;
- automatically obtaining a detail volume encompassing the detail, wherein the detail volume comprises a surface, wherein each base solid intersects the surface of the detail volume;
- automatically obtaining a reference parametrization for the base solids based on the solid types of the base solids, wherein the reference parametrization comprises one or more parameters and associated initial parameter values for the base solids;
- automatically retrieving in a target CAD model N target solids, via:
   ∘ obtaining a detail size for the detail, preferably based on a diagonal of a rectangular or cuboid bounding box of the detail volume;
   ∘ searching for N target solids in the target CAD model, whereby all pairs of solids of the N target solids comprise a distance equal to or smaller than said detail size, via:
      ▪ pre-filtering solids of the target CAD model based on solid type compatibility with at least one of the base solids;
      ▪ constructing a proximity graph comprising nodes and edges, wherein a node represents a pre-filtered solid of the target CAD model, wherein an edge interconnects two nodes if the solids represented by the two nodes comprise a distance smaller than said detail size;
      ▪ identifying a clique of size N in said proximity graph, a clique in a graph being a set of completely interconnected nodes,
- automatically verifying that the N target solids comprise properties compatible with the N base solids, via:
   ∘ obtaining a target parametrization for the target solids based on the solid types of the target solids, the target parametrization comprising one or more parameters and associated target parameter values for the target solids;
   ∘ verifying compatibility of the reference and target parametrizations;
- automatically computing a spatial transformation, which in conjunction with the target parameter values, forms a mapping between the base solids and the target solids;
- automatically inserting, or suggesting via a visualization means the insertion of, an adapted detail volume to replace the corresponding volume at or near the target solids, wherein the adapted detail volume is based on the detail volume, the spatial transformation and the target parameter values.

### Example 2: Parametrized detail library for CAD

The present example pertains to an exemplary algorithm (CIM) according to the present invention.

### 2.1 Purpose

A detail library containing small example CAD models ("detail files") each containing a single detail may be constructed. In a GUI, a user can select a detail from the detail library and launch propagation in a target CAD model. This allows a detail to be used many times in many different target CAD models.

Application EP 18 189 646.5, which is hereby incorporated in the present application in its entirety, provides for unmodified copying of the detail. It may map a detail to a target location using translations, rotations and reflections. This limits the usability of a given detail. For two walls joined under an angle of 90°, for example, the connection pattern between the walls cannot be propagated to walls joined under a different angle according to the methodology of EP 18 189 646.5.

To extend the applicability of a given detail to more target locations, the present invention provides for parametrization. For example, the angle under which two walls are joined may be parameterized. The parametrized angle may be mapped on the angle between target walls.

### 2.2 Concept

In particular, the base solids of a detail configuration (encompassing the detail and base solids) may be parametrized (reference parametrization; initial parameter values) and target solids may be parametrized (target parametrization; target parameter values). In case of compatible parametrizations, the detail may be morphed onto the target solids by acquiring for the reference parametrization new parameter values based on, and preferably equal to, the target parameter values of the target parametrization.

Therefore, the present example provides for a CIM for detail adaptation and insertion in a CAD model, comprising the steps of:
- obtaining, based on user input, from a reference CAD model (e.g. detail file containing the reference CAD model) a detail and N base solids at or near the detail, with N ≥ 1;
- automatically obtaining a reference parametrization (e.g. determining, or loading from a detail file if present) for the base solids, wherein the reference parametrization comprises one or more parameters and associated initial parameter values for the base solids;
- automatically retrieving N target solids in a target CAD model;
- automatically verifying that the N target solids comprise properties compatible with the N base solids, via:
   ∘ obtaining a target parametrization for the target solids, the target parametrization comprising one or more parameters and associated target parameter values for the target solids;
   ∘ verifying compatibility of the reference and target parametrizations;
- automatically computing a spatial transformation, which in conjunction with the target parameter values, forms a mapping between the base solids and the target solids;
- automatically inserting, or suggesting via a visualization means the insertion of, an adapted detail at or near the target solids, wherein the adapted detail is based on the detail, the spatial transformation and the target parameter values.

The present example may further pertain to any embodiment disclosed in this document, such as the preferred embodiment disclosed in example 1 above.

### 2.3 Terminology

- **Detail configuration:** A detail configuration is a collection of data that is part of a CAD model, which contains all information needed to automatically define and propagate a detail. It comprises:
   ∘ One, two or more base solids.
   ∘ Zero, one or more detail objects (detail solids, detail block references, detail components, ...).
   ∘ (Optional) Detail type (planar 2D or 3D). When a detail type is not defined, it may be determined based on other information in the detail configuration.
   ∘ (Optional) Detail volume. When a detail volume is not defined, it may be determined based on other information in the detail configuration.
   ∘ (Optional) Reference morph parameters. If a detail configuration contains reference morph parameters, it is said to be parametrized. When reference morph parameters are not defined, they may be determined based on other information in the detail file.
   ∘ (Optional) Constraints. Constraints express links between (parts of) base solids, detail objects and the detail volume that should be taken into account when morphing.
- **Detail file:** A detail file is a CAD file containing one detail configuration.
- **Morph parameter:** A reference morph parameter is created by a detail morpher and represents a numerical value of a particular geometric or relative geometric property of the collection of base solids in a detail configuration that should be adjusted to the target situation when propagating the detail. For example: an angle between two base solids, a thickness of a wall, an offset, width and height of a beam profile, etc. A reference morph parameter most preferably also contains an identification of the detail morpher that generated it. The same detail morpher may then be utilized to retrieve target solids and verify compatibility of the target solids with the base solids.
- **Morph restriction:** A morph restriction ("constraint") restricts possible values of reference morph parameters. A morph restriction may be implemented as absolute bounds on the morph parameters or as tolerances, i.e. absolute or relative deviations from some initial values. Morph restrictions can be modified by the user to control the applicability of the parametrized detail to various target situations.
- **Morphing a detail configuration:** Morphing a detail configuration is adjusting the geometry of a detail configuration in order to match a set of target morph parameters.
- **Morph context:** A morph context is extra data stored in the detail file that is needed for morphing. The extra data may be morpher specific. Examples:
   ∘ Initial values of reference morph parameters.
   ∘ Meta parameters that are used in the procedure which determines target morph parameters for a target situation.
- **Detail morpher:** A detail morpher is a logical object or collection of procedures that has the following capabilities:
   ∘ Parametrizing a detail file, i.e. add morph parameters, a morph context and possible constraints to the detail file.
   ∘ Morphing a detail configuration based on given morph parameters and a given morph context.
   ∘ Analyze an ordered set of target solids to determine target morph parameters.

### 2.4 Detail file

A detail configuration is preferably saved in a DWG file format which uses dedicated layers to identify base solids, detail objects and detail volume. This makes it easy for a user to manually create such a detail file from scratch. A detail is considered as a planar 2D detail when a section is present in the detail file on a dedicated section layer and as a 3D detail when there is no section.

### 2.5 Parametrizing a detail configuration

Parametrizing a detail configuration consists of two steps: an automatic step, in which morph parameters and possibly some constraints are defined, and an optional manual step in which the user can define additional parameters and constraints.

### 2.5.1 Automatic parametrization

In this step, a number of predefined morphers are triggered in a predefined order to parametrize the detail configuration. As soon as one morpher is able to parametrize the detail configuration, that reference parametrization is retained. A morpher defines a set of morph parameters that the user can use in expressions of additional constraints or parameters, but the user can most preferably not define such morph parameters manually.

Additionally, the morpher can generate some extra constraints, adjustable and removable by the user, that specify how the geometry of detail volume and detail objects is related to the base solids.

Examples 3 and 4 pertain to example morphers.

### 2.5.2 Extension by user

After automatic parametrization, the user can modify the values of morph parameters to preview how the detail configuration changes accordingly. This is possible because the change of a morph parameter in the detail file triggers a morph of the detail configuration in the file. The morph functionality of the appropriate morpher (the one that generated the morph parameter) is called. The user can then add extra constraints and parameters how the detail volume and detail objects should be adjusted when the base solids are changed during a morph.

### 2.6 Search for target solids

The filtering procedure is similar to the one described in EP 18 189 646.5. The filtering procedure is in particular based on a proximity graph. The present example may in particular provide for:
- Filtering of target solids by the detail morpher, based on solid type. Once the category of linear, planar or compact has been established, the morpher could also check whether a solid subtype corresponds to one of the types in the reference detail configuration (e.g. profile types (= subtypes) (I-profile, U-profile, C-profile) for linear solids).
- The proximity criterion when constructing the proximity graph also calls a filter on the detail morpher. For example, the morpher could check whether the angle between target solids lies in an allowed angle interval between two similar solids in the detail configuration.

### 2.7 Mapping a detail

The mapping procedure is similar as the one described in EP 18 189 646.5. The mapping procedure is based on a one-to-one correspondence and a spatial transformation. The present invention may in particular provide for:
- Performing via the morpher a solid type (and optionally subtype) check for a proposed mapping. For example, the morpher could check whether the type of profile of the mapped solids is the same.
- For a given one-to-one mapping, the morpher is used to analyze the target situation. At this stage it is known which role the different candidate solids assume and target morph parameters can be determined. If this is successful, and when the detail configuration can be morphed based on the target morph parameters (no conflicts in constraints, target morph parameters satisfy the morph restrictions), an adapted detail is constructed from the morphed detail configuration. The adapted detail is mapped to the target solids. Note that a "morph" is not always necessary, as the target morph parameters may match the reference morph parameters in the detail file, or target solids with the same morph parameters have already been encountered before. In the latter case, the corresponding adapted detail may be reused. A cache can be used to store all adapted details to re-use them.

### Example 3: Planar connection morpher

### 3.1 Planar base solids and planar 2D details

The present example pertains to example 2 above, and discloses a particular type of detail morpher for planar base solids, which have a layered composition structure. The connection details are planar 2D details which are defined in a section plane and which remain invariant in an extrusion direction perpendicular to the section plane over a corresponding extrusion dimension. A planar base solid has two parallel major surfaces, one of which is the reference surface. Every layer in the composition structure is bounded by two layer planes parallel to the reference surface.

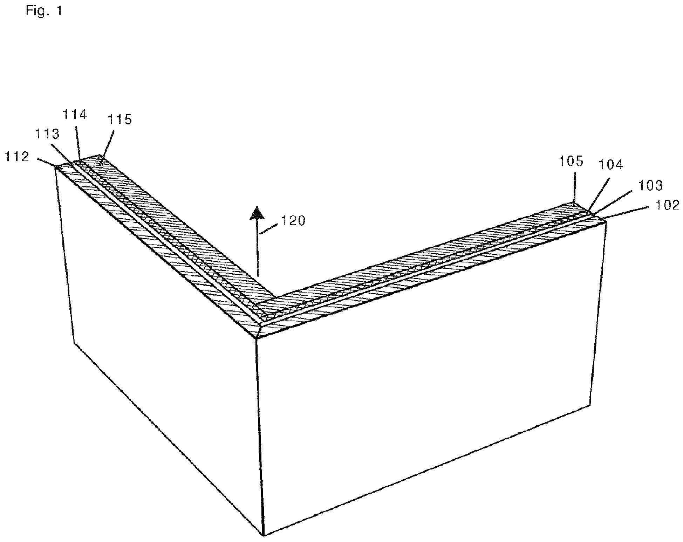

**Figure 1** shows a perspective view of a first multi-layered wall (102, 103, 104, 105) connected to a second multi-layered wall (112, 113, 114, 115). The connection comprises an extrusion direction (120) along which the cross sections of the walls remain invariant (at least in the vicinity of the connection) over a corresponding extrusion dimension. The base solids are the walls, which are of the planar solid type. The detail is the particular connection pattern between the walls.

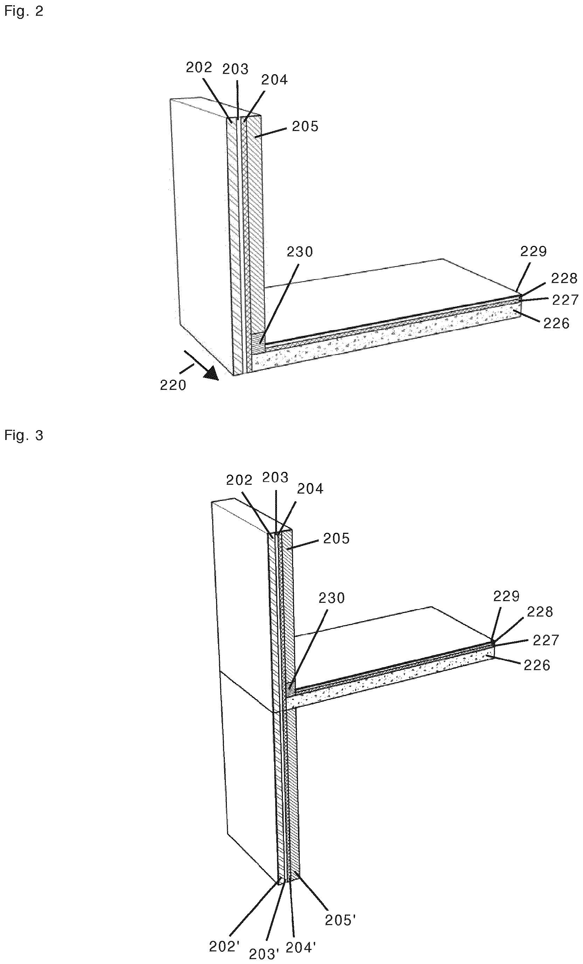

**Figure 2** shows a perspective view of a multi-layered wall (202, 203, 204, 205) connected to a multi-layered slab (226, 227, 228, 229). The connection comprises an insulation block (230), and an extrusion direction (220) along which the cross sections of the wall, the slab and the detail object remain invariant (at least in the vicinity of the connection) over a corresponding extrusion dimension. The base solids are the wall and the slab, which are of the planar solid type. The detail comprises the insulation block (detail object), and the particular connection pattern between the wall, the slab and the insulation block.

**Figure 3** shows a perspective view of a first multi-layered wall (202, 203, 204, 205), a second multi-layered wall (202', 203', 204', 205') and a multi-layered slab (226, 227, 228, 229). They comprise an interconnection. The interconnection comprises an insulation block (230), and an extrusion direction along which the cross sections of the walls, the slab and the insulation block remain invariant (at least in the vicinity of the interconnection) over a corresponding extrusion dimension. The base solids are the walls and the slab, which are of the planar solid type. The detail comprises the insulation block (detail object), and the particular interconnection pattern between the walls, the slab and the insulation block.

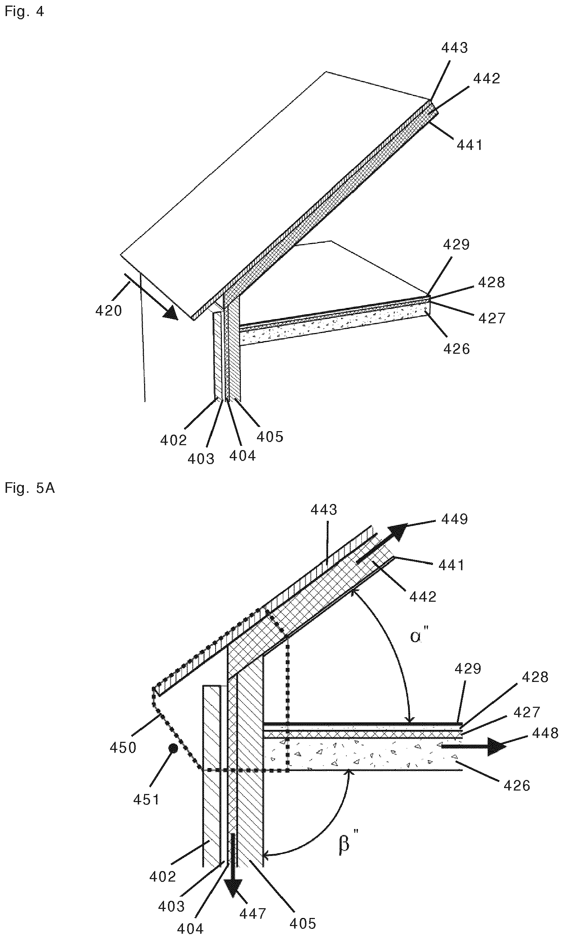

**Figure 4** shows a perspective view of a multi-layered wall (402, 403, 404, 405), a multi-layered slab (426, 427, 428, 429) and a multi-layered roof (441, 442, 443). They comprise two interconnections. The interconnections comprises an extrusion direction (420) along which the cross sections of the wall, the slab and the roof remain invariant (at least in the vicinity of the interconnections) over a corresponding extrusion dimension. The base solids are the wall, the slab and the roof, which are of the planar solid type. The detail comprises the particular interconnection pattern between the wall and the slab, the particular interconnection pattern between the wall and the roof, as well as the particular extension of the upper layer (443) of the roof in a horizontal direction beyond the wall.

### 3.2 Morph parameters

The morph parameters most preferably comprise:
- Layer thickness parameters. For each composition layer, there is one parameter expressing the thickness of the layer. In case two planar base solids are co-planar, comprise the same number of layers, the same layer compositions, the same layer thicknesses, and the same order of layers, i.e. each corresponding layer is co-planar, layer thickness parameters are only added for one of these base solids and the other base solid 'inherits' these parameters. Base solids are ordered upon parametrization. The ordering is stored in the detail file. Layers per base solid are ordered from the reference surface to the opposite surface.
- Angle parameters. One reference base solid is chosen (e.g. based on orientation (e.g. perpendicular to Z-axis) or total volume). For each base solid that is not parallel to this reference base solid, an angle parameter is introduced unless there is another base solid parallel to the considered one for which an angle parameter has already been introduced (i.e. parallel base solids are kept parallel).

First, an approximate detail center is determined, e.g. by taking the intersection points of the geometric center lines of the base solids in the section plane with the center line of the reference base solid, and computing the centroid of those points. The determination of the detail center preferably does not depend on the detail volume, having the advantage of analyzing target solids without (at least at first) computation of a target detail volume.

A detail size is determined from the reference detail volume (e.g. the length of a diagonal of a bounding box thereof).

For each planar base solid, an outward direction is determined. If one of the extrema of the base solid in the direction of its center line in the section plane lies within a distance equal to the detail size from the detail center, the base solid is said to be "connected at an end" to the detail and the outward direction is chosen along the center line and away from the connected end. If the planar base solid is not connected at an end, the outward direction is chosen to be parallel to the center line with orientation based on predefined heuristics, e.g.:
- If the planar base solid is the reference base solid, choose the outward direction such that it has positive projection on one of the axes of the Global Coordinate System (GCS). Try preferably in fixed order Z, X, Y.
- If the base solid is not the reference base solid, choose the outward direction such that it has positive projection on either the normal of the reference base solid (= outward normal from the reference surface) or the outward direction of the reference base solid. Preferably first try normal.

Angles between base solids are preferably determined as the unsigned angle between their outward directions. Angles thus preferably lie in the range [0, π].

**Figure 5A** shows a cross section view of the planar base solids of **Figure 4****.** The slab (426, 427, 428, 429) is horizontal and chosen as the reference base solid. The intersection (not shown) of the center lines of the roof (441, 442, 443) and the slab, and the intersection (not shown) of the center lines of the wall (402, 403, 404, 405) and the slab, are computed. The center point (451) is determined as the geometric centroid of these intersections. The planar 2D detail volume is indicated with the dashed line (450). A detail size is computed as the length of a diagonal of a bounding rectangular box (not shown) of the detail volume. Each base solid has an outer end which lies in the direction of its center line within a distance equal to the detail size from the detail center point. All planar base solids are therefore "connected at an end" to the detail. The outward directions (447, 448, 449) for the wall, the slab and the roof are therefore along the center line and away from their connected ends. Angle parameter α" for the roof with respect to the slab, and angle parameter β" for the wall with respect to the slab, are introduced.

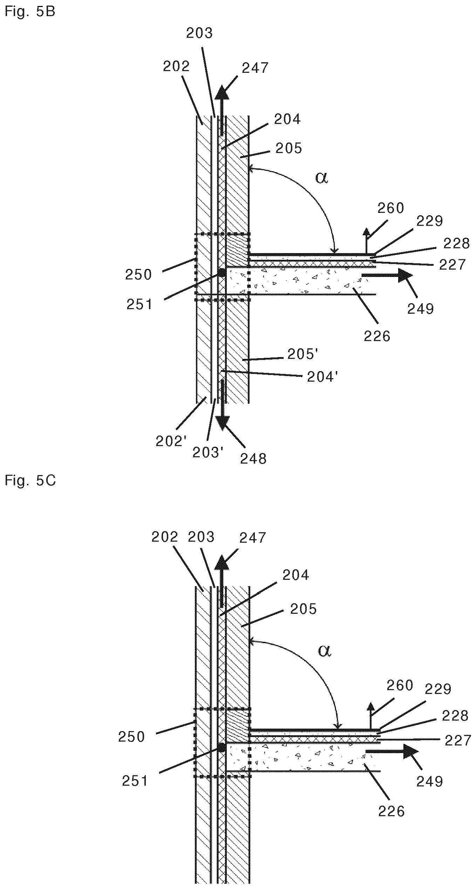

**Figure 5B** shows a cross section view of the planar base solids of **Figure 3****.** The slab (226, 227, 228, 229) is horizontal and chosen as the reference base solid. The intersection of the center lines of the first wall (202, 203, 204, 205) and the slab, and the intersection of the center lines of the second wall (202', 203', 204', 205') and the slab, are computed. The center point (251) is determined as the geometric centroid of these intersections. In the present case, the intersections coincide with the center point. The planar 2D detail volume is indicated with the dashed line (250). A detail size is computed as the length of a diagonal of a bounding rectangular box of the detail volume, which in the present case coincides with the indicated dashed line (250). Each base solid has an outer end which lies in the direction of its center line within a distance equal to the detail size from the detail center point. All planar base solids are therefore "connected" to the detail. The outward directions (247, 248, 249) for the first wall, the second wall and the slab are therefore along the center line and away from their connected ends. Angle parameter α for the first wall with respect to the slab is introduced. As the second wall is coplanar with the first wall, and comprises the same number of layers, the same layer compositions, the same layer thicknesses, and the same layer ordering, i.e. each corresponding layer is coplanar, a constraint of alignment of the first and second walls and their layers is introduced, and hence no new angle parameter is introduced for the second wall with respect to the slab. Likewise, the second wall inherits the layer thickness parameters of the first wall.

**Figure 5C** shows a cross section view of exemplary planar base solids. The base solids of **Figure 5C** are modified with respect to the base solids of **Figure 5B** in that only a single wall (202, 203, 204, 205) is present which extends both above and below the slab (226, 227, 228, 229). The slab (226, 227, 228, 229) is horizontal and chosen as the reference base solid. The intersection of the center lines of the wall (202, 203, 204, 205) and the slab is computed, and is in the present case equal to the detail center point (251) as there is only one intersection. The planar 2D detail volume is indicated with the dashed line (250). A detail size is computed as the length of a diagonal of a bounding rectangular box of the detail volume, which in the present case coincides with the indicated dashed line (250). The slab has an outer end which lies in the direction of its center line within a distance equal to the detail size from the detail center point. However, the wall has no such outer end in the proximity of the detail center point. While the slab is "connected at an end" to the detail, the wall is "not connected at an end" to the detail. The outward direction (249) for the slab is therefore along the center line and away from its connected end. The slab comprises a reference surface, i.e. the upper surface of layer (229), and an outward normal (260). The outward direction (247) for the wall is chosen to have positive projection on the normal (260) of the reference surface of the slab. Angle parameter α for the wall with respect to the slab is introduced.

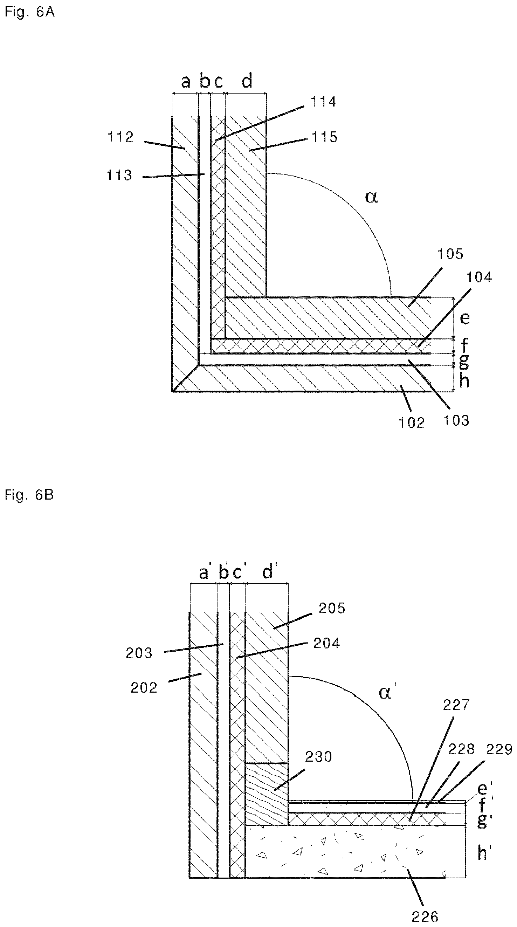

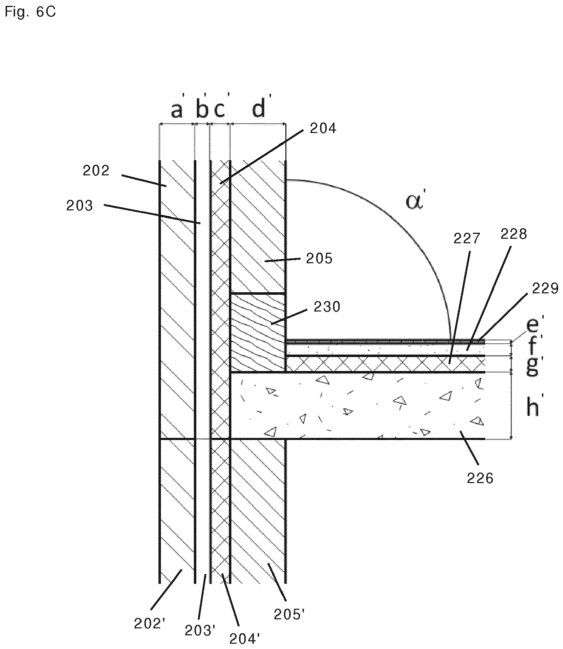

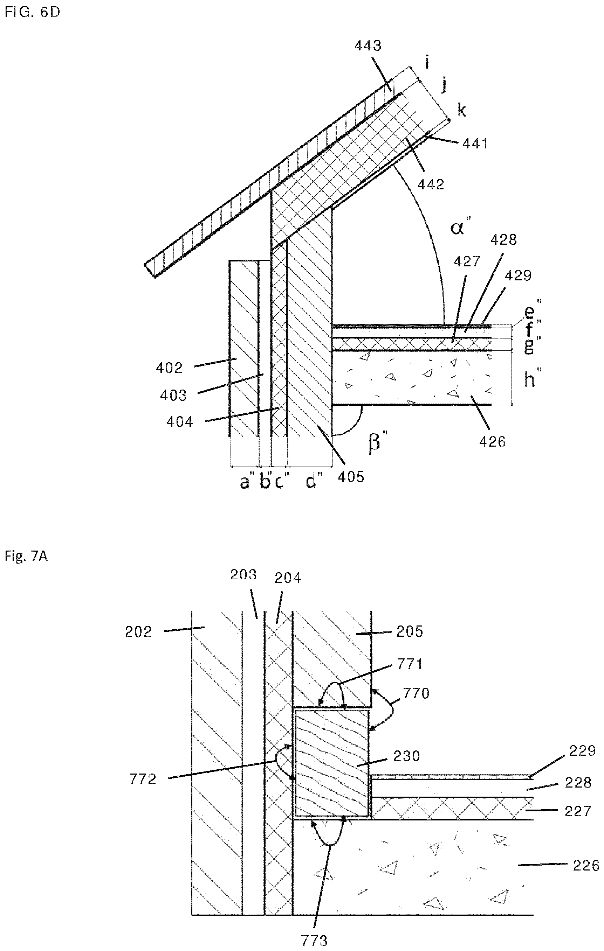

**Figures 6A, 6B****,** **6C** **and** **6D** show cross section views of the planar base solids of, respectively, **Figures 1****,** **2****,** **3** **and** **4****,** with indication of parameters. As disclosed above, the parametrization for multi-layered planar solids introduces layer thickness parameters (a, b, c, d, e, f, g, h, a', b', c', d', e', f', g', h', a", b", c", d", e", f", g", h", i, j, k) and angle parameters (α, α', α", β"), with co-planarity constraints for the walls and the wall layers in **Figure 6C****.**

Morph restrictions can be implemented as tolerances:
- A thickness tolerance that limits the change in total thickness of each planar base solid, both in positive and negative directions. The original total thickness is stored in the morph context (see below).
- An angle tolerance that limits the change in each angle parameter, both in positive and negative directions. The original angle is stored in the morph context (see below).

The following morph context data for the planar connection morpher can be stored in the detail file:
- The detail size
- The index of the reference base solid in the ordered list of base solids
- For each base solid:
   ∘ Whether or not it is connected at an end
   ∘ The sign of the projection of its outward direction on the normal of the reference surface of the reference base solid
   ∘ The sign of the projection of the normal of its reference surface on the outward direction of the reference base solid
   ∘ The original total thickness value
   ∘ (Preferably) the original layer thickness values
   ∘ The number of layers
- For each angle parameter:
   ∘ The original angle value

The morph context data hence comprises initial parameter values of the reference parametrization.

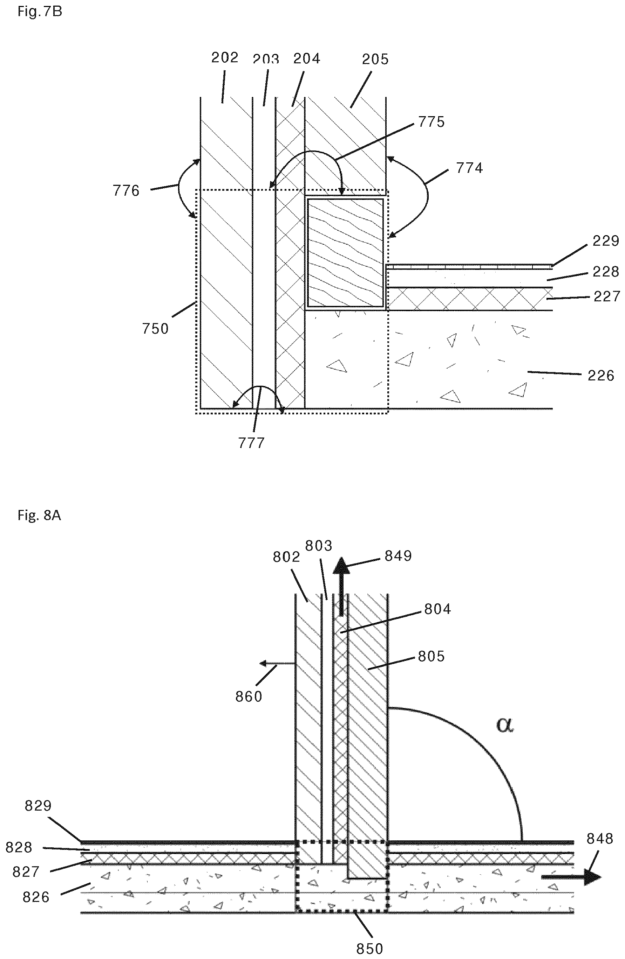

The planar connection morpher adds constraints to link the detail objects to the base solids and to link the detail volume to both base solids and detail objects. As mentioned before, these constraints can subsequently be edited by the user, if desired. The initial constraints have the advantage that they most often produce useful results, thereby not requiring, or only requiring to a limited extent, user editing thereof.
- Constraints on detail objects: The approach is to detect (near) coincidences of faces and edges of the detail objects with faces and edges of the base solids and enforce these (near) coincidences with constraints. The relevant faces and edges are those that are parallel to the normal of the section plane (extrusion direction of the detail). For the base solid there is the extra restriction that the considered faces and edges intersect with or are enclosed in the detail volume. **Figure 7A** shows a schematic cross section view of the base solids of **Figure 2****.** The detail object (230) is schematically represented slightly smaller, to better indicate detail object coincidence morph constraints (770, 771, 772, 773) of faces and edges of the detail object (230) with faces and edges of the base solids (202, 203, 204, 205; 226, 227, 228, 229).
- Constraints on detail volume: For each face of the detail volume parallel to the extrusion direction of the detail, the closest parallel face and the closest parallel edge of base solids and detail objects is searched for. The closest of these (if found) is retained, and a distance constraint is added which enforces the current distance. For base solids, only faces and edges which intersect with or are enclosed in the detail volume are considered. **Figure 7B** shows a schematic cross section view of the base solids of **Figure 2****.** The detail object (230) is schematically represented slightly smaller, and the detail volume (750) is schematically represented slightly larger, to better indicate detail volume distance morph constraints (774, 775, 776, 777).

### 3.3 Type check, proximity graph filtering, and mapping

For the planar connection morpher, a non-planar base solid is not accepted for the proximity graph (first pre-filtering). For a target planar solid, it is checked whether there is a base solid in the reference detail configuration for which all of the following (second pre-filtering) checks hold:
- Same BIM type of no BIM type for both
- Same number of layers, same compositions of layers, same order of layer compositions
- Total thickness of the target solid is within the thickness tolerance of the base solid

In addition to the proximity requirement, an edge connection between two nodes of the proximity graph additionally requires angular compatibility:
- Find all pairs of base solids for which the first base solid satisfies the second pre-filtering checks with respect to the first target solid (first node) and for which the second base solid satisfies the second pre-filtering checks with respect to the second target solid (second node).
- Check whether the angle between the target solids is within tolerance of the angle between the base solids in any of the above pairs. Allowed angle intervals for the angles can be derived from the original angle value in the morph context.
- If no pairs remain, the edge connection is not formed in the proximity graph, while if at least one pair remains, the edge connection is formed in the proximity graph.

Target parameters are derived from target solids in a similar way as they are derived for the base solids. The differences are:
- The target solids do not have to be ordered. The ordering may be obtained from the one-to-one mapping of the target solids and the base solids.
- The reference target solid is already fixed, as it follows from the one-to-one mapping and the index of the reference base solid stored in the morph context.
- The detail size for the calculation of outward directions is taken from the morph context.
- When determining an outward direction for a target solid and when the reference target solid is not connected at its end, the outward direction of the reference target solid is chosen so that the dependent outward directions and/or outward normal of the other target solids maximally match with the orientations of the base solids as stored in the morph context.

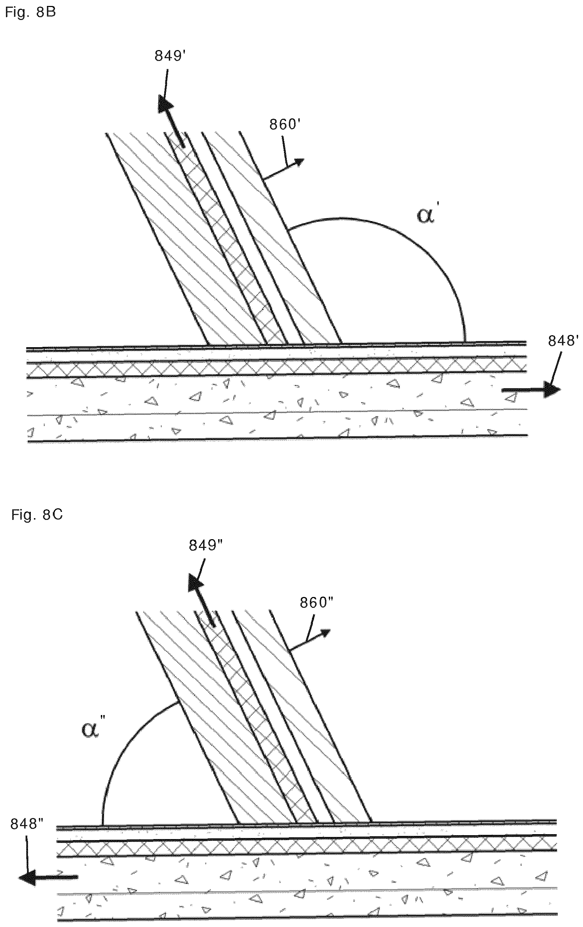

**Figure 8A** shows a cross section view of exemplary planar base solids, in particular a wall (802, 803, 804, 805) and a slab (826, 827, 828, 829), and a corresponding detail volume (850). The slab is horizontal and chosen as the reference base solid, with outward direction (848), as represented in the Figure, to the right. The wall is connected at an end, which determines its outward direction (849). The normal (860) of the reference surface of the wall is oriented, as represented in the Figure, to the left. An angle parameter α is introduced between the wall and the slab, based on the outward directions. **Figures 8B and 8C** show cross section views of exemplary target solids, to which the detail according to **Figure 8A** is attempted to be morphed. The normal (860', 860") of the reference surface of the wall is oriented in both **Figure 8B and 8C****,** as represented in the Figures, to the right. The outward direction (849', 849") of the wall is oriented, as represented in the Figures, upward, as the wall is connected at its lower end. In Figure **8B** the outward direction (848') of the slab is oriented, as represented in the Figure, to the right. In this target situation, projection of the normal (860') of the reference surface of the wall onto the outward direction (848') of the slab yields a sign opposite to the sign of the corresponding projection in the detail configuration. This yields an angle α' and corresponding value larger than 90°, and results in a target situation to which the detail configuration (**Figure 8A**) cannot be morphed. In **Figure 8C****,** an opposite orientation of the outward direction (848") is considered. In this target situation, projection of the normal (860") of the reference surface of the wall onto the outward direction (848") of the slab yields a sign equal to the sign of the corresponding projection in the detail configuration. This yields an angle α" and corresponding value smaller than 90°, and results in a target situation to which the detail configuration (**Figure 8A**) can be morphed.

Morphing is most preferably performed via a constraint solver. This solving takes into account two types of constraints:
- External constraints, either automatically generated morph constraints or user-added constraints.
- Internal constraints, generated on-the-fly based on the parameters and their initial values. These constraints express the desired goal geometry of the base solids. Internal constraints may be generated for the total solid thickness, a layer thickness, a layer surface distance to the reference surface and/or an angle between two planar solids, and may be implemented as absolute bounds on the parameters or as tolerances, i.e. absolute or relative deviations from initial values.

The goal of the planar connection morpher is to adjust the layer thicknesses of all base solids and the angles between the base solids without changing the connection topology of the layers.

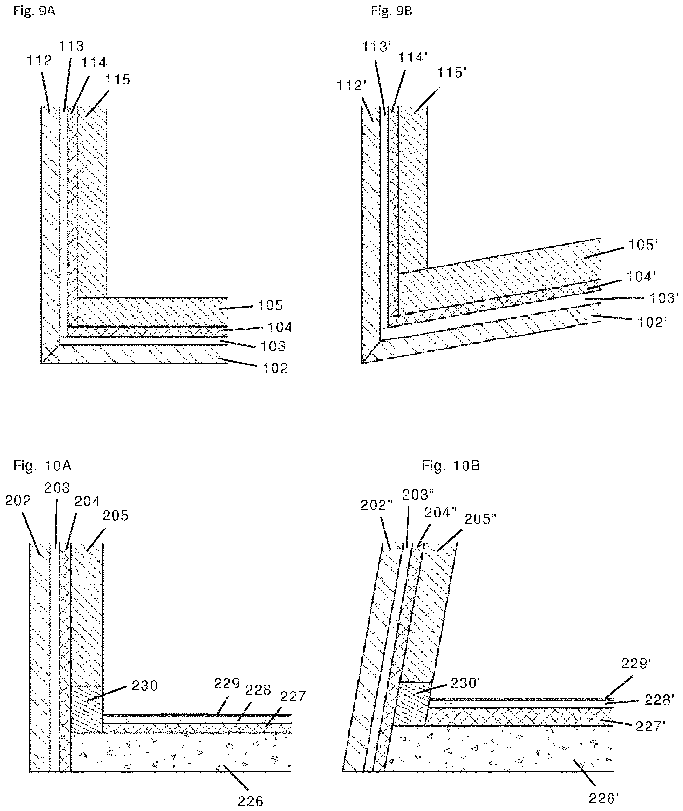

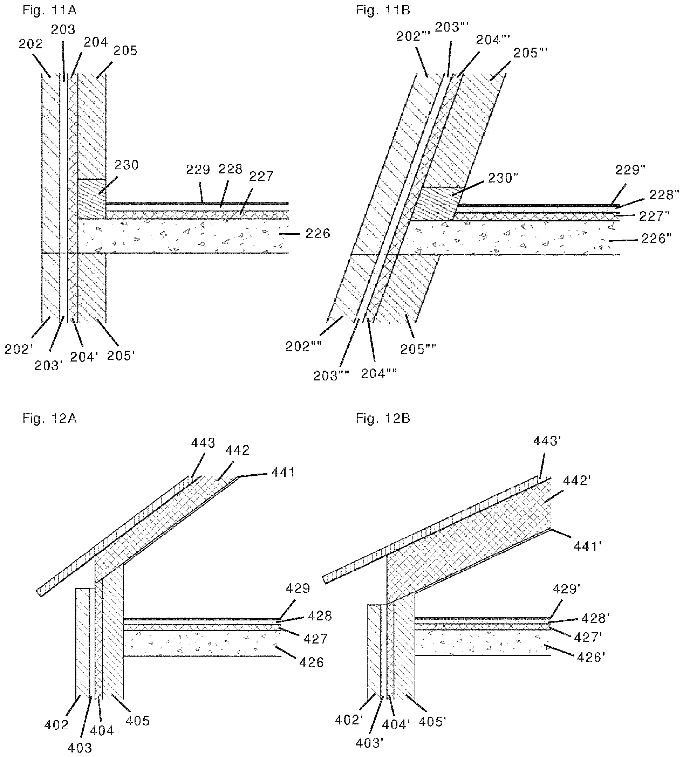

**Figures 9A, 10A****,** **11A and 12A** show cross section views of the planar base solids of, respectively, **Figures 1****,** **2****,** **3** **and** **4****.** **Figures 9B, 10B****,** **11B and 12B** show cross section views of planar target solids onto which the details of, respectively,

**Figures 9A, 10A****,** **11A and 12A** have been morphed (adapted and inserted) according to an implementation of the methodology described in this example. Corresponding layers are like-numbered, with accents (', ", "', "") added.

### Example 4: Linear connection morpher

### 4.1 Linear base solids and 3D details

The present example pertains to example 2 above, and discloses a particular type of detail morpher for linear base solids, such as beams, columns, members, pipes, gutters, and the like. The connection details are 3D details. A linear base solid has a profile and a longitudinal axis (also called the axis in short). The axis is a line segment. The infinite line tangent to the axis is called the axis line. The profile has two mutually perpendicular profile axes, which are both perpendicular to the longitudinal axis.

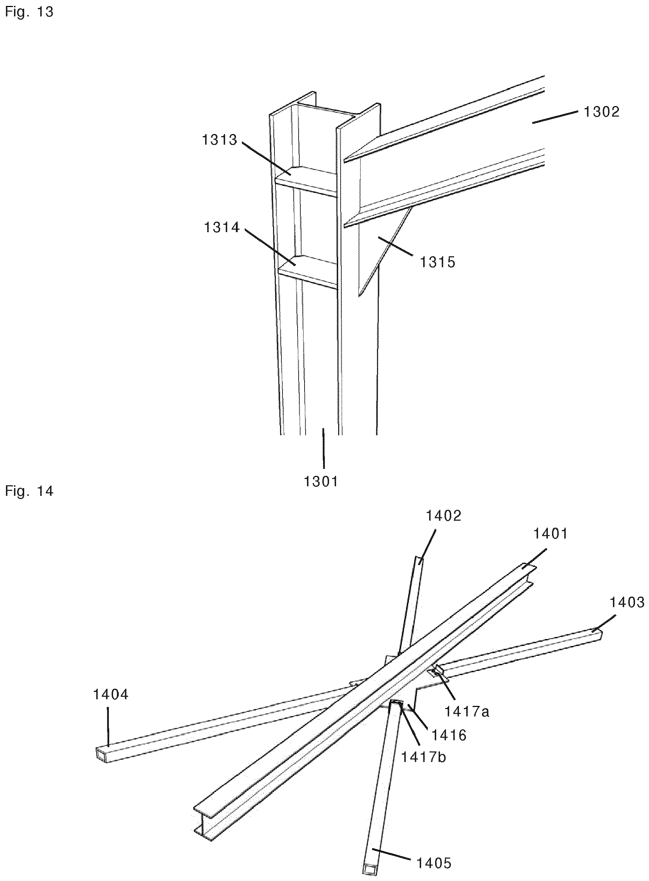

**Figure 13** shows a perspective view of a column (1301) connected to a beam (1302), via a number of welded plates (1313, 1314, 1315). The base solids are the column and the beam, which are of the linear solid type. The detail comprises the welded plates (detail objects) and the particular skew truncation (with respect to its longitudinal axis) of the beam near the connection.

**Figure 14** shows a perspective view of four members (1402, 1403, 1404, 1405) connected to a beam (1401), via a plate (1416) and brackets (1417a, 1417b). The base solids are the beam and members, which are of the linear solid type. The detail comprises the plate and brackets (detail objects), and an adaptation of the members to fit the brackets.

### 4.2 Morph parameters

A reference base solid is chosen, e.g. the linear base solid with the heaviest profile (largest profile area) or the most vertical linear solid (based on angle between the longitudinal axis and the Z-axis of a GCS).

A detail center is determined, e.g. by taking the closest points of the axis lines of the base solids to the axis line of the reference base solid, and computing the geometric centroid of these points. The determination of the detail center preferably does not depend on the detail volume, having the advantage of analyzing target solids without (at least at first) computation of a target detail volume.

A detail size is determined from the reference detail volume (e.g. the length of a diagonal of a bounding box thereof).

An outward direction is defined for the reference base solid. If one of the end points of the axis of the reference base solid lies within a distance equal to the detail size from the detail center, the reference base solid is said to be "connected at an end" and the outwards direction is chosen along its axis and away from the connected end. If the reference base solid is not connected at an end, the outward direction is chosen to be parallel to its axis and such that is has positive projection on one of the axes of a GCS. Try in fixed order Z, X, Y.

A local coordinate system is determined for the detail configuration:
- The Z-axis is chosen along the outward direction of the reference base solid.
- The X-axis is chosen along a first profile axis of the reference base solid.
- The Y-axis is chosen to make the local coordinate system right-handed.

For each base solid (other than the reference), one of the local coordinate planes (XY, XZ, YZ) is chosen as intercept plane:
- If the axis line of the solid is parallel to the Z-axis, choose XY.
- Else if the intersection point of the axis line with the XZ plane lies closer to the origin than the intersection point with the YZ plane, choose XZ.
- Else if the intersection point of the axis line with the YZ plane lies closer to the origin than the intersection points with the XZ plane, choose YZ.
- Else if both intersection points lie equally close to the origin, choose the plane for which the angle between the axis line and the plane normal is smallest.

For each base solid (other than the reference), an outward direction is determined:
- If the base solid is connected at its end, the outward direction is chosen along the axis line and away from the detail center.
- If the base solid is not connected at its end, the outward direction is chosen such that is has a positive projection on the normal of the intercept plane (e.g. Z when the intercept plane is XY).

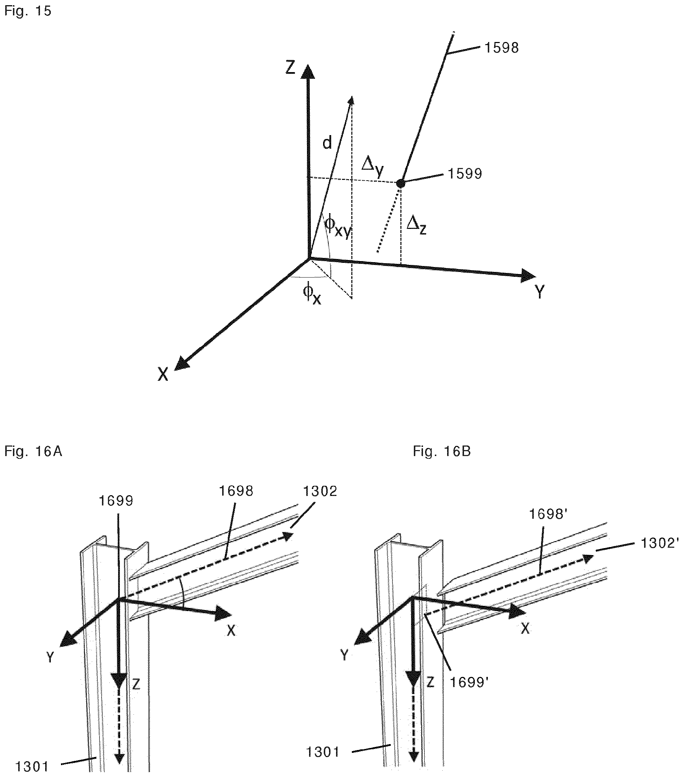

With reference to exemplary **Figure 15****,** for each base solid (other than the reference) four position morph parameters in this local coordinate system are introduced that define the position of its **axis line** (1599):
- An angle (φₓ) of the projection of the outward direction (d) on the XY plane, measured around positive Z and from X.
- An angle (φ_{xy}) of the outward direction with respect to the XY plane.
- A first coordinate of the intersection (1598) of the axis line with the intercept plane (e.g. Δ_{y} when the intercept plane is YZ).
- A second coordinate of the intersection (1598) of the axis line with the intercept plane (e.g. Δ_{z} when the intercept plane is YZ).

**Figures 16A** shows a perspective view of the linear base solids of **Figure 13****.** The column (1301) is chosen as the reference linear base solid. Both linear base solids are connected at their end. The axis lines and corresponding outward directions are indicated by the dashed arrows. The local coordinate system (XYZ) is shown as well. The detail objects have been left out for clarity. The intercept plane for the beam (1302) is YZ. Parameter φ_{xy} is indicated with an arc in the figure. Parameter φₓ is equal to zero as the axis line (1698) of the beam is parallel to the XZ plane. The intersection (1699) of the axis line of the beam with the intercept plane lies at the origin of the local coordinate system, and Δ_{y} and Δ_{z} are hence equal to zero.

**Figures 16A** shows a perspective view of exemplary linear base solids. The linear base solids of **Figure 16B** are modified with respect to the linear base solids of **Figure 16A** in that a translation of the beam (1302') with respect to the column (1301) is introduced. Due to the translation, the intersection (1699') of the axis line (1698') of the beam with the intercept plane no longer lies at the origin of the local coordinate system, and Δ_{y} and Δ_{z} are hence not equal to zero.

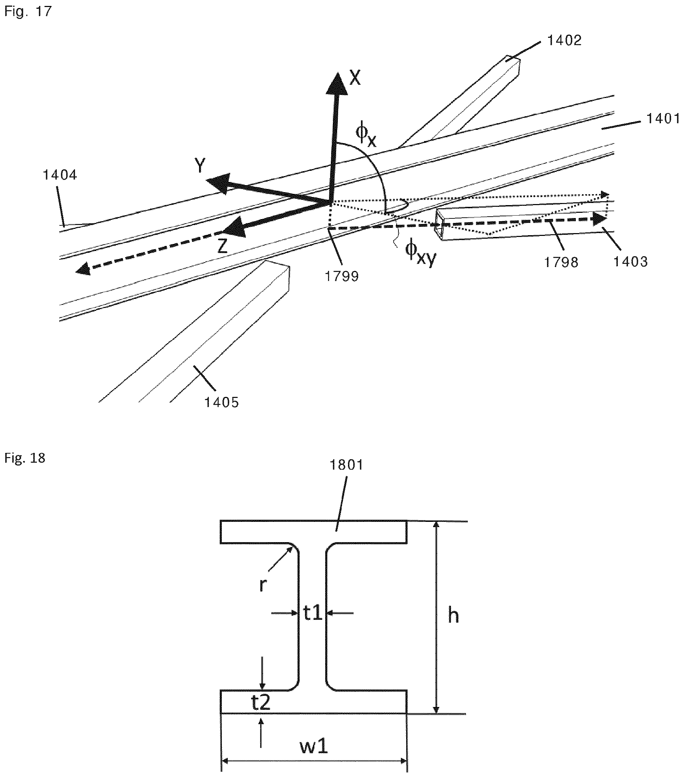

**Figure 17** shows a perspective view of the linear base solids of **Figure 14****.** The beam (1401) is chosen as the reference linear base solid. The members are connected at their end. The axis line and outward direction of member (1403) is indicated with a dashed arrow (1798). The outward direction of the beam is also indicated with a dashed arrow. The local coordinate system (XYZ) is shown as well. The detail objects have been left out for clarity. The intercept plane for all members is XZ. The position morph parameters are illustrated for member (1403).

Each linear base solid also has a number of profile morph parameters describing its profile. Different profile types can be parametrized with different parameters.

**Figure 18** shows a cross section view of an exemplary I-profile (1801), and a corresponding parametrization (h, w1, t1, t2, r).

Morph restrictions can be implemented as tolerances:
- A dimension tolerance that limits the change in total width or height of the profile of each base solid, both in positive and negative directions. The original profile dimensions are stored in the morph context (see below).
- An offset tolerance that limits the changes in the parameters that describe the intersection point of the axis line with the intercept plane. The choice of the intercept plane and the original values of these parameters are stored in the morph context (see below).
- An angle tolerance that limits the change in each angle parameter, both in positive and negative directions. The original angles are stored in the morph context (see below).

The following morph context data for the linear connection morpher can be stored in the detail file:
- The detail size
- The index of the reference base solid In the ordered list of base solids
- For each base solid:
   ∘ Whether or not it is connected at an end
   ∘ The original angle of its outward direction with the XY plane
   ∘ The original angle of its outward direction with the X axis
   ∘ The original value of the first intersection coordinate
   ∘ The original value of the second intersection coordinate
   ∘ The intercept plane
   ∘ The original width of the profile
   ∘ The original height of the profile

### 4.3 Type check, proximity graph filtering, and mapping

For the linear connection morpher, a non-linear base solid is not accepted for the proximity graph (first pre-filtering). For a target linear solid, it is checked whether there is a base solid in the reference detail configuration for which all of the following (second pre-filtering) checks hold:
- Same BIM type of no BIM type for both
- Same profile shape (I-shape, C-shape, U-shape, and the like), i.e. same parametrization of the profile
- Profile width of the target solid is within the width tolerance of the base solid
- Profile height of the target solid is within the height tolerance of the base solid

In addition to the proximity requirement, an edge connection between two nodes of the proximity graph additionally requires angular compatibility:
- Find all pairs of base solids for which the first base solid satisfies the second pre-filtering checks with respect to the first target solid (first node) and for which the second base solid satisfies the second pre-filtering checks with respect to the second target solid (second node).
- Check whether the angle between the target solids is within tolerance of the angle between the base solids in any of the above pairs. Allowed angle intervals for the angles can be derived from the original angle values in the morph context.
- If no pairs remain, the edge connection is not formed in the proximity graph, while if at least one pair remains, the edge connection is formed in the proximity graph.

Target parameters are derived from target solids in a similar way as they are derived for the base solids. The differences are:
- The target solids do not have to be ordered. The ordering may be obtained from the one-to-one mapping of the target solids and the base solids.
- The reference target solid is already fixed, as it follows from the one-to-one mapping and the index of the reference base solid stored in the morph context.
- The detail size for the calculation of outward directions is taken from the morph context.
- When determining the local coordinate system for the target solids, several options are tried to account for rotated, mirrored, and the like configurations:
   ∘ Mirror the Z-direction
   ∘ Mirror the X-direction
   ∘ For some predefined profile types, allow an interchange of profile axes.
All combinations of these options are tried and the combination that yields most resemblance with the reference configuration as stored in the morph context is chosen. More resemblance means that more outward directions point to the same half space with respect to their intercept planes as in the reference configuration and that more intersection coordinates have the same sign as in the reference configuration.

Morphing is most preferably performed via a constraint solver. This solving takes into account two types of constraints:
- External constraints, added by the user.
- Internal constraints, added on-the-fly.
- Internal transformation, generated on-the-fly based on the goal position morph parameters.

The goal of the linear connection morpher is to adjust the profiles of all base solids and positions and orientations of the base solids, without changing the connection topology.

The morphing consists of two steps:
- Change the profile cross section of the base solids based on the target profile parameters. The adapted profile cross section is extruded along the axis of the base solid to adapt the entire linear solid. Features, such as clippings and openings, are remapped and applied when possible. Constraints are remapped to the new faces and edges.
- Adjust the position and orientation of all base solids based on the target position parameters. This step introduces transformations consisting of a rotation (to match the target angles) and a translation (to match to target intersection coordinates) for each base solid, which are handles by the constraint solver. The transformation is only applied to the side faces of the linear solid (perpendicular to the profile axis directions). This allows for end faces of the linear solid to stay connected to other linear solids.

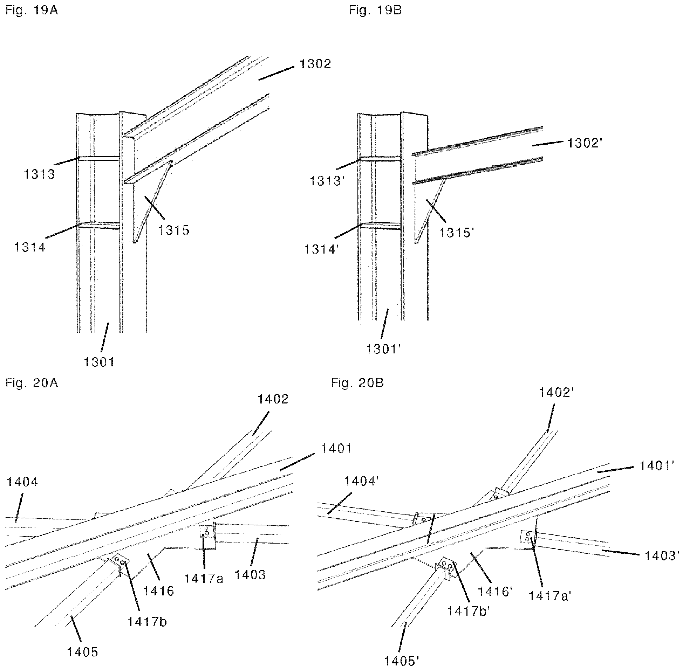

**Figures 19A and 20A** show perspective views of the linear base solids of, respectively, **Figures 13 and 14****.** **Figures 19B and 20B** show perspective views of linear target solids onto which the details of, respectively, **Figures 19A and 20A** have been morphed (adapted and inserted) according to an implementation of the methodology described in this example. Corresponding elements are like-numbered, with accents (') added.

In **Figure 19B****,** the angle between the beam (1302') and the column (1301') as well as the beam profile dimensions are changed with respect to the detail configuration in **Figure 19A****.** In this example, three user-defined constraints were present in the detail file:
- coincidence of a face of plate (1315) with a profile face of the column;
- coincidence of a face of plate (1315) with a profile face of the beam;
- coincidence of the end face of the beam (1302) with a profile face of the column.

The coincidences are kept in the morphed detail in **Figure 19B****.**

In **Figure 20B****,** the angles between each members and the beam, the beam profile dimensions, as well as the member profile dimensions are changed with respect to the detail configuration in **Figure 20A****.** In this example, the following user-defined constraints were present in the detail file:
- coincidence of a face of the plate (1416) with a profile face of the beam (1401) (to maintain tangency of the plate to the beam);
- coincidence of a face of each bracket (1417a, 1417b) to an end face of a corresponding member (1402, 1403, 1404, 1405) (to keep the connecting elements attached to the respective members);
- coincidence of a face of each bracket (1417a, 1417b) to a corresponding side of the plate (1416) (to keep the sides of the plate tangent to the respective brackets).

The coincidences are kept in the morphed detail in **Figure 20B****.**

## Claims

1. Computer-implemented method for detail adaptation and insertion in a computer-aided design model, comprising the steps of:
- obtaining, based on user input, from a reference computer-aided design model a detail and N base solids at or near the detail, wherein N ≥ 1;
- automatically obtaining a solid type for each base solid;
- automatically obtaining a reference parametrization for the base solids based on the solid types of the base solids, the reference parametrization comprising one or more parameters and associated initial parameter values for the base solids;
- automatically retrieving in a target computer-aided design model N target solids comprising properties compatible with the N base solids based on the reference parametrization;
- automatically computing a spatial transformation and new parameter values for the reference parametrization which form a mapping between the base solids and the target solids;
- automatically inserting, or suggesting via a visualization means the insertion of, an adapted detail at or near the target solids, wherein the adapted detail is based on the detail, the spatial transformation and the new parameter values.

2. Computer-implemented method according to any one of the preceding claims, wherein the step of retrieving in a target computer-aided design model N target solids comprising properties compatible with the N base solids based on the reference parametrization is the steps of:
- automatically retrieving N target solids in the target computer-aided design model;
- automatically verifying that the N target solids comprise properties compatible with the N base solids, comprising the steps of:
• obtaining a solid type for each target solid;
• obtaining a target parametrization for the target solids based on the solid types of the target solids, the target parametrization comprising one or more parameters and associated target parameter values for the target solids;
• verifying compatibility of the reference and target parametrizations,
wherein said spatial transformation and/or said new parameter values are computed based on the target parameter values.

3. Computer-implemented method according to any one of the preceding claims, wherein N ≥ 2, wherein the step of retrieving in a target computer-aided design model N target solids comprising properties compatible with the N base solids based on the reference parametrization is the steps of:
- automatically retrieving N target solids in the target computer-aided design model, comprising the steps of:
• obtaining a detail size for the detail;
• searching for N target solids in the target computer-aided design model, whereby all pairs of solids of the N target solids comprise a distance equal to or smaller than said detail size;
- automatically verifying that the N target solids comprise properties compatible with the N base solids based on the reference parametrization.

4. Computer-implemented method according to preceding claim 3, wherein the step of searching for N target solids in the target computer-aided design model, whereby all pairs of solids of the N target solids comprise a distance equal to or smaller than said detail size comprises the steps of:
- constructing a proximity graph comprising nodes and edges, wherein a node represents a solid of the target computer-aided design model, wherein an edge interconnects two nodes if the solids represented by the two nodes comprise a distance smaller than said detail size;
- identifying a clique of size N in said proximity graph, a clique in a graph being a set of completely interconnected nodes.

5. Computer-implemented method according to any one of the preceding claims, wherein the step of automatically retrieving N target solids in the target computer-aided design model comprises the step of automatically pre-filtering solids of the target computer-aided design model based on solid type compatibility with at least one of the base solids.

6. Computer-implemented method according to any one of the preceding claims, wherein the step of automatically computing a spatial transformation and new parameter values for the reference parametrization which form a mapping between the base solids and the target solids is the steps of:
- determining a one-to-one correspondence between the base solids and target solids based on compatibility of solid type, one or more geometric properties and/or one or more relative geometric properties of the base solids and target solids; and
- either:
• determining a point and direction for each base solid;
• computing the spatial transformation as an iterative sequence of partial transformations, wherein each partial transformation maps the point and direction of a base solid onto a corresponding point and direction of the corresponding target solid;
- or:
• determining a reference center point for the base solids and a target center point for the target solids, preferably each associated with the respective reference and target parametrizations;
• computing the spatial transformation, wherein the spatial transformation comprises a mapping between the reference and target center points and a rotation.

7. Computer-implemented method according to any one of the preceding claims, wherein the method comprises the step of automatically obtaining a detail volume, wherein the detail volume encompasses the detail, wherein said adapted detail is an adapted detail volume, which is automatically inserted or for which the insertion is automatically suggested, to replace the corresponding volume at or near the target solids, wherein the adapted detail volume is based on the detail volume, the spatial transformation and the new parameter values, preferably wherein the detail volume comprises a surface, wherein each base solid intersects the surface of the detail volume.

8. Computer-implemented method according to preceding claim 7, wherein the detail comprises zero, one or more detail objects, wherein obtaining said detail volume comprises the steps of:
- determining for each base solid a base detail part;
- determining for each base solid a directed bounding box encompassing said base solid, the detail objects, and the base detail parts;
- determining an intersection of the directed bounding boxes; and
- obtaining said detail volume based on said intersection,
preferably wherein a base solid comprises a major axis along which said base solid extends into said intersection, preferably wherein the method comprises the step of adjusting the intersection so that the adjusted intersection comprises a surface portion perpendicular to the major axis of the base solid, through which surface portion the base solid extends into the intersection.

9. Computer-implemented method according to any one of the preceding claims, wherein said step of obtaining the detail and base solids is the step of obtaining a detail configuration via user input, preferably obtaining via user input a detail file comprising a detail configuration structured according to the data structure of claim 15, wherein the detail configuration comprises:
- the reference computer-aided design model, comprising:
• the detail, wherein the detail comprises zero, one or more detail objects;
• the N base solids at or near the detail, with N ≥ 1;
- a detail annotation, comprising:
• an identification of the N base solids;
• an identification of the zero, one or more detail objects;
• optionally, a solid type for one or more of the base solids;
• optionally, a detail type;
• optionally, a detail volume encompassing the detail;
• optionally, a detail size;
• optionally, a reference parametrization;
• optionally, one or more constraints for the reference parametrization,
preferably wherein said step of automatically obtaining a solid type for each base solid is the step of: if present, obtaining the solid type for a base solid from the detail annotation, or if not present, selecting a solid type for the base solid based on one or more geometric properties of the base solid, preferably wherein said step of automatically obtaining a reference parametrization for the base solids based on the solid types of the base solids is the step of: if present, obtaining the reference parametrization from the detail annotation, or if not present, determining the reference parametrization based on the solid types and geometric properties of the base solids.

10. Computer-implemented method according to any one of the preceding claims, wherein N ≥ 2, wherein the base solids comprise multiple layers, wherein the reference parametrization comprises a thickness parameter for each layer of each base solid,
preferably wherein the base solids are of a planar solid type,
preferably wherein the reference parametrization comprises an angle parameter between two base solids,
preferably the method according to preceding claim 7, wherein the detail volume is two-dimensional and planar, wherein the detail volume comprises an extrusion direction perpendicular to the two-dimensional planar detail volume along which the parts of the base solids enclosed within the detail volume remain invariant in the extrusion direction over a corresponding extrusion dimension.

11. Computer-implemented method according to any one of the preceding claims, wherein N ≥ 2, wherein the base solids comprise a central axis, wherein the reference parametrization comprises an angle parameter between the central axes of two base solids,
preferably wherein the base solids are of a linear solid type,
preferably the method according to preceding claim 7, wherein the detail volume is three-dimensional.

12. Computer-implemented method according to any one of the preceding claims, wherein:
- a parameter is a geometric parameter for a geometric property of a solid and/or a relative geometric parameter for a relative geometric property between two solids; and/or
- a solid type is one of linear, planar and compact.

13. Computer system for detail adaptation and insertion in a computer-aided design model, the computer system configured for performing the computer-implemented method according to any one of the preceding claims 1 to 12.

14. Computer program product for detail adaptation and insertion in a computer-aided design model, the computer program product comprising instructions which, when the computer program product is executed by a computer, cause the computer to carry out the computer-implemented method according to any one of preceding claims 1 to 12.

15. Data structure for detail adaptation and insertion in a computer-aided design model, wherein the data structure is configured for representing:
- a detail computer-aided design model, comprising:
• a detail, wherein the detail comprises zero, one or more detail objects;
• N base solids at or near the detail, with N ≥ 1;
- a detail annotation, comprising:
• an identification of the N base solids;
• an identification of the zero, one or more detail objects;
• a solid type for each the base solids;
• a detail type;
• a detail volume encompassing the detail;
• a detail size;
• a parametrization;
• optionally, one or more constraints for the parametrization,
preferably wherein the detail annotation is embedded in the detail computer-aided design model, more preferably wherein the data structure is a computer-aided design model data structure which embeds one or more layers for representing the detail annotation.
